(19) Europäisches Patentamt
European Patent Office
Office européen des brevets

(11) EP 3 802 709 B1

(12) EUROPEAN PATENT SPECIFICATION

(45) Date of publication and mention of the grant of the patent:
**07.08.2024 Bulletin 2024/32**

(21) Application number: **19728065.4**

(22) Date of filing: **04.06.2019**

(51) International Patent Classification (IPC):
***C09D 5/16*** *(2006.01)* ***C09D 183/12*** *(2006.01)*
***C09D 7/48*** *(2018.01)* ***C09D 183/04*** *(2006.01)*

(52) Cooperative Patent Classification (CPC):
(C-Sets available)
**C09D 5/1693; C09D 5/1675; C09D 5/1687; C09D 7/48;** C08G 77/16; C08G 77/46; C08K 5/005; C08K 5/3435 (Cont.)

(86) International application number:
**PCT/EP2019/064431**

(87) International publication number:
**WO 2019/233985 (12.12.2019 Gazette 2019/50)**

# (54) METHOD FOR ESTABLISHING A FOULING RELEASE COATING SYSTEM

VERFAHREN ZUR HERSTELLUNG EINES BEWUCHSFREISETZUNGSBESCHICHTUNGSSYSTEMS

PROCÉDÉ PERMETTANT D’ÉTABLIR UN SYSTÈME DE REVÊTEMENT DE LIBÉRATION D’OBSTRUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.06.2018 EP 18175757**

(43) Date of publication of application:
**14.04.2021 Bulletin 2021/15**

(73) Proprietor: **Hempel A/S**
**2800 Kongens Lyngby (DK)**

(72) Inventors:
- **SØRENSEN, Kim Flugt**
**2800 Kgs. Lyngby (DK)**
- **BLOM, Anders**
**2800 Kgs. Lyngby (DK)**
- **NOGUER, Albert Camós**
**2800 Kgs. Lyngby (DK)**
- **OLSEN, Stefan Møller**
**2800 Kgs. Lyngby (DK)**

(74) Representative: **Inspicos P/S**
**Agern Allé 24**
**2970 Hørsholm (DK)**

(56) References cited:
**WO-A1-2011/076856**
**WO-A1-2014/166492**
**WO-A1-2016/004961**
**WO-A1-98/00017**
**US-A1- 2003 232 910**

- **DATABASE WPI Week 201101, Derwent World Patents Index; AN 2010-Q22007, XP002785272**
- **DATABASE WPI Week 201703, Derwent World Patents Index; AN 2016-80822X, XP002785273**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C09D 183/04, C08L 83/00, C08K 3/36**

## Description

TECHNICAL FIELD

A method for establishing a fouling-release coating system on a surface of a substrate, as well as a fouling-release coating system are provided.

BACKGROUND

Aquatic structures, in particular immersed marine structures that come in contact with water, especially sea water, have a tendency to become fouled by marine organisms. Antifouling and fouling-release paint systems are abundantly used for such structures, e.g. ships, buoys, watercraft structures, etc. in order to suppress settlement of such marine organisms, or to encourage their release.

Fouling-release coating systems for steel structures typically include three principal layers, namely an anticorrosive layer applied to the steel substrate, a fouling-release layer, and an intermediate layer, often referred to as a "tie-coat", for establishing strong bonding between the often incompatible anticorrosive layer and the fouling-release layer.

Silicone-based fouling-release coatings and coating systems for marine applications are typically viewed as rather stable systems towards various types of degradation. Hence, for example light stabilizers are not needed for polysiloxane-based fouling-release coatings due to the inherent UV-stability of the polysiloxane/silicone polymer molecules.

Examples of such modern types of fouling-release coatings are those described in WO 2011/076856, WO 2013/000479, WO 2014/117786 and WO 2016/004961. Other documents in this field include WO2016/088630, US2003232910, JP2010280852, WO2013000478 and WO9800017

The present inventors have now identified that combining hindered amines, especially piperidine derivatives (such as those known as hindered amine light stabilizers), and poly(oxyalkylene) constituents within marine polysiloxane-based fouling-release coatings significantly improves the antifouling performance of said coatings. Surprisingly this effect is even evident when the coatings are immersed in sea-water and thereby hidden from sunlight.

SUMMARY

The subject matter of the present invention is defined in claims 1-15 as attached.

A method for establishing a fouling-release coating system on a surface of a substrate is thus provided, which comprises the sequential steps of;

a. optionally applying one or more layers of a primer composition onto the surface of said substrate and allowing said layer(s) to cure, thereby forming a primed substrate;
b. applying one or more layers of silicone-containing tie-coat composition in liquid form, onto the surface of said primed substrate or said substrate, and allowing said layer(s) to cure, thereby forming a cured tie-coat layer;
c. applying one or more layers of a fouling-release coating composition onto said cured tie-coat layer, wherein said fouling-release coating composition comprises a condensation-curable polysiloxane-based binder matrix constituting at least 40 % by dry weight of said coating composition, wherein more than 65 % by weight of said binder matrix is represented by polysiloxane parts, and allowing said fouling-release coating composition to cure;

wherein said tie-coat composition and/or said fouling-release coating composition comprises constituents having poly(oxyalkylene) chains,
and wherein said tie-coat composition and/or said fouling-release coating
composition further comprises one or more sterically hindered amines, wherein the sterically hindered amines are hindered amine moieties of the general formula I described further below.

A fouling-release coating system obtained by this method is also provided. A fouling-release coating system is also provided which comprises:

a. a substrate,
b. optionally one or more primer layers,
c. at least one silicone-containing tie-coat layer
d. a fouling-release layer comprising a condensation-cured polysiloxane-based binder matrix constituting at least 40 % by dry weight of said coat, wherein more than 65 % by weight of said binder matrix is represented by polysiloxane parts, said coat comprising constituents having poly(oxyalkylene) chains,

wherein said tie-coat layer and/or said fouling-release layer further comprises one or more sterically hindered amines, wherein the sterically hindered amines are hindered amine moieties of the general formula I described further below.

Further details of the invention are set out in the dependent claims and the following description.

DETAILED DISCLOSURE

In a first aspect, a method is provided for establishing a fouling-release coating system on a surface of a substrate.

The term "substrate" is intended to mean a solid material onto which a coating composition may be applied. The substrate typically comprises a metal such as steel, iron, aluminium, or a glass-fibre. In the most interesting embodiments, the substrate is a metal substrate, in particular a steel substrate. In an alternative embodiment, the substrate is a glass-fibre substrate.

The term "surface" is used in its normal sense, and refers to the exterior boundary of an object upon which the fouling-release coating system of the invention is applied. As such, the surface of the substrate may either be the "native" surface (e.g. the steel surface). However, the substrate is typically coated, e.g. with an anticorrosive coating, so that the surface of the substrate is constituted by such a coating. Alternatively, the substrate may carry a paint coat, e.g. a worn-out antifouling coat or similar. When present, the anticorrosive coat is typically applied in a total dry film thickness of 100-600 μm, such as 150-450 μm, e.g. 200-400 μm.

Particular examples of surfaces suitable for coating according to the invention are surfaces of vessels (including but not limited to boats, yachts, motorboats, motor launches, ocean liners, tugboats, tankers, container ships and other cargo ships, submarines, and naval vessels of all types), pipes, shore and off-shore machinery, constructions and objects of all types such as piers, pilings, bridge substructures, water-power installations and structures, underwater oil well structures, nets and other aquatic culture installations, and buoys, etc.

*Primer coating*

In a first optional step, the method comprises the applying one or more layers of a primer composition onto the surface of said substrate and allowing said layer(s) to cure, thereby forming a primed substrate. The primed substrate thus constitutes a substrate coated with a cured primer layer.

The primer composition is typically an epoxy-based primer composition. Suitable epoxy-based coats are those commercially available such as Hempel Light Primer 45557, Hempadur 17634 and Hempadur 15570.

The term "epoxy-based composition" should be construed as the combination of the one or more epoxy resins, one or more curing agents, any reactive epoxy diluents and any reactive acrylic modifiers.

The "epoxy-based composition" comprises one or more epoxy resins selected from aromatic or non aromatic epoxy resins (e.g. hydrogenated epoxy resins), containing more than one epoxy group per molecule, which is placed internally, terminally, or on a cyclic structure, together with one or more suitable curing agents to act as cross-linking agents. Combinations with reactive diluents from the classes mono functional glycidyl ethers or esters of aliphatic, cycloaliphatic or aromatic compounds can be included in order to reduce viscosity and for improved application and physical properties.

Suitable epoxy-based compositions are believed to include epoxy and modified epoxy resins selected from bisphenol A, bisphenol F, Novolac epoxies, non-aromatic epoxies, cycloaliphatic epoxies, epoxidised polysulfides, glycidyl esters and epoxy functional acrylics or any combinations hereof .

The epoxy-based primer composition also comprises one or more curing agents selected from compounds or polymers comprising at least two reactive hydrogen atoms linked to nitrogen.

Suitable curing agents are believed to include amines or amino functional polymers selected from aliphatic amines and polyamines (e.g. cycloaliphatic amines and polyamines) , polyamidoamines, polyoxyalkylene amines (e.g. polyoxyalkylene diamines), aminated polyalkoxyethers (e.g. those sold commercially as "Jeffamines"), alkylene amines (e.g. alkylene diamines), aralkylamines, aromatic amines, Mannich bases (e.g. those sold commercially as "phenalkamines"), amino functional silanes, and including epoxy adducts and derivatives thereof. The skilled person would know, that epoxy adducts are reaction products of a substoichiometric amount of an epoxy with one or more amines comprising an active hydrogens bonded to nitrogen atoms as described in Kurt Weigel "EPOXIDHARZLACKE", 1965, Wissenschaftliche Verlagsgesellschaft M.B.H, Stuttgart, pp 203-210.

The primer composition is typically applied and cured to a dry film thickness of 20-900 μm, such as 20-750 μm, e.g. 50-600 μm.

The term "applying" is used - with respect to any layer/composition - in its normal meaning within the paint industry. Thus, "applying" is conducted by means of any conventional means, e.g. by brush, by roller, by spraying, by dipping, etc. The commercially most interesting way of "applying" the coating composition is by spraying. Spraying is effected by means of conventional spraying equipment known to the person skilled in the art.

*Tie-coating*

In a second step, the method comprises applying one or more layers of silicone-containing tie-coat composition in liquid form, onto the surface of said primed substrate or said substrate, and allowing said layer(s) to cure, thereby forming a cured tie-coat layer.

Generally suitable tie-coat compositions are to be found in patent publications WO2014/166492, WO2010/018164 and WO2005/033219.

The tie-coat compositions are silicone-containing. Accordingly the tie-coat composition suitably comprises one or more cross-linkable polysiloxanes, preferably selected from hydroxy-functional polysiloxanes, $C_1$-$C_4$ alkoxy-functional polysiloxanes, amino-functional polysiloxanes and epoxy-functional polysiloxanes.

Suitably, the tie-coat composition comprises 3-90%, preferably 10-80%, more preferably 20-60% of said one or more cross-linkable polysiloxanes, by wet weight of the total tie-coat composition. Even more preferably, the tie-coat composition comprises 3-15% or more than 40% of said one or more cross-linkable polysiloxanes, by wet weight of the total tie-coat composition.

The tie-coat composition may additionally comprise one or more hydrolysable silanes having two or more hydrolysable groups. Said tie-coat composition suitably comprises up to 30% of said one or more hydrolysable silanes having two or more hydrolysable groups, by wet weight of the total tie-coat composition.

The tie-coat composition may comprise one or more epoxy-functional or isocyanate-functional polymers. In this way, good compatibility with an underlying epoxy primer layer can be achieved. The epoxy-functional polymers in the tie-coat composition are suitably cross-linkable with the cross-linkable polysiloxanes. Any of the epoxy resins described above for the primer composition may also be suitable as the epoxy-functional polymer(s) in the tie-coat composition.

The tie-coat composition may additionally comprise a condensation catalyst to accelerate the cross-linking. Examples of suitable catalysts include organometal- and metal salts of organic carboxylic acids, such as dibutyl tin dilaurate, dibutyl tin diacetate, dibutyl tin dioctoate, dibutyl tin 2-ethylhexoate, dioctyl tin dilaurate, dioctyl tin diacetate, dioctyl tin dioctoate, dioctyl tin 2-ethylhexoate, dioctyltin di neodecanoate, tin naphthenate, tin butyrate, tin oleate, tin caprylate, iron 2-ethylhexoate, lead 2-ethyloctoate, cobalt-2-ethylhexoate, manganese 2-ethylhexoate, zinc 2-ethylhexoate, zinc naphthenate, zinc stearate, cobalt naphthenate and titanium naphtenate;; catalysts containing tertiary amines such as guanidine derivatives, such as 1,2-dicyclohexyl-3-(1-piperidyl)guanidine (FR2930778); 1-butyl-2,3-dicyclohexyl-1,3-dimethylguanidine (WO2010149869) and further tertiary amines, such as 1,4-ethylenepiperazine (DABCO) and 2,4,6-tris (dimethylamino methyl) phenol.

The catalyst may be used alone or as combination of two or more catalysts. The amount of catalyst to be used depends on the reactivity of the catalyst and the cross-linker(s) and desired recoating interval to subsequent coat / drying time. In a preferred embodiment the catalyst concentration is between 0.01- 10 % by weight; such as 0.01-4 %; such as 0.005-2 %; especially 0.001-1% of the total combined amount of the epoxy-based binder system and curing agent.

The tie-coat composition may further comprise solvents and additives.

Examples of solvents are alcohols, such as methanol, ethanol, propanol and butanol, aliphatic, cycloaliphatic and aromatic hydrocarbons such as white spirit, cyclohexane, toluene, xylene and naphtha solvent, esters such as methoxypropyl acetate, n-butyl acetate and 2-ethoxyethyl acetate; octamethyltrisiloxane, and mixtures thereof.

The solvents, if any, typically constitute 5-50 % by volume of the tie-coat composition.

Examples of additives are:

(i) non-reactive fluids such as organopolysiloxanes; for example polydimethylsiloxane, methylphenyl polysiloxane; petroleum oils and combinations thereof;

(ii) surfactants such as derivatives of propylene oxide or ethylene oxide such as alkylphenol-ethylene oxide condensates (alkylphenol ethoxylates); ethoxylated monoethanolamides of unsaturated fatty acids such as ethoxylated monoethanolamides of linoleic acid; sodium dodecyl sulfate; and soya lecithin;

(iii) wetting agents and dispersants such as those described in M. Ash and I. Ash, "Handbook of Paint and Coating Raw Materials, Vol. 1", 1996, Gower Publ. Ltd., Great Britain, pp 821-823 and 849-851;

(iv) thickeners and anti-settling agents such as colloidal silica, hydrated aluminium silicate (bentonite), aluminiumtristearate, aluminiummonostearate, xanthan gum, chrysotile, pyrogenic silica, hydrogenated castor oil, organo-modified clays, polyamide waxes and polyethylene waxes; and

(v) dyes such as 1,4-bis(butylamino)anthraquinone and other anthraquinone derivatives; toluidine dyes, etc.

Any additives typically constitute 0-30 %, such as 0-15 %, by dry weight of the tie-coat composition.

Furthermore, the tie-coat composition may comprise pigments and fillers.

Pigments and fillers are in the present context viewed in conjunction as constituents that may be added to the tie-coat composition with only limited implications on the adhesion properties. "Pigments" are normally characterised in that they render the final tie-coat composition non-transparent and non-translucent, whereas "fillers" normally are characterised in that they do not render the tie-coat composition non-translucent and therefore do not contribute significantly to hide any material below the coated composition.

Examples of pigments are grades of titanium dioxide, red iron oxide, zinc oxide, carbon black, graphite, yellow iron oxide, red molybdate, yellow molybdate, zinc sulfide, antimony oxide, sodium aluminium sulfosilicates, quinacridones, phthalocyanine blue, phthalocyanine green, black iron oxide, indanthrone blue, cobalt aluminium oxide, carbazole dioxazine, chromium oxide, isoindoline orange, bis-acetoacet-o-tolidiole, benzimidazolone, quinaphtalone yellow, isoindoline yellow, tetrachloroisoindolinone and quinophthalone yellow.

Examples of fillers are calcium carbonate such as calcite, dolomite, talc, mica, feldspar, barium sulfate, kaolin, nephelin, silica, perlite, magnesium oxide, and quartz flour, etc. Fillers (and pigments) may also be added in the form of nanotubes or fibres, thus, apart from the before-mentioned examples of fillers, the tie-coat composition may also comprise fibres, e.g. those generally and specifically described in WO 00/77102. Any pigments and/or fillers typically constitute 0-60 %, such as 0-50 %, preferably 5-45 %, such as 5-40 % or 5-35 %, by dry weight of the tie-coat composition.

With the aim of facilitating easy application of the tie-coat composition (e.g. by spray, brush or roller application techniques), the tie-coat composition typically has a viscosity in the range of 25-25,000 mPa•s, such as in the range of 150-15,000 mPa•s, in particular in the range of 200-4000 mPa•s.

In some embodiments, the tie-coat of the present invention is applied on an old epoxy based coat which has been:

- washed to remove contaminants, or
- washed to remove contaminants and roughened by means of sanding, sweeping or the like.

In one particular aspect, the tie-coat comprises one or more poly(oxyalkylene)-modified polysiloxane oils, as described herein.

In another particular aspect, the tie-coat comprises one or more sterically hindered amines, as described herein. Said hindered amine moieties, in particular 2,2,6,6-tetraalkyl piperidine moieties, are suitably present in an amount of 0.003-0.5 mol/kg per coating layer.

In a particularly preferred aspect, the tie-coat may comprise both one or more poly(oxyalkylene)-modified polysiloxane oils and one or more sterically hindered amines, as described herein.

*Fouling-release coating composition*

In a third step, the method comprises applying one or more layers of a fouling-release coating composition onto said cured tie-coat layer and allowing said fouling-release coating composition to cure. Thus, a fouling-release coating system is established.

It should be understood that the expression "fouling-release" (as well as "fouling control") relates to all types of bio-fouling (i.e. settlement of organisms on a surface) of a surface exposed to an aqueous environment or to aqueous liquids (e.g. within tanks, pipes, etc.). It is however, believed that the coatings defined herein are particularly relevant for avoiding or reducing marine bio-fouling, i.e. bio-fouling arising in connection with the exposure of a surface to a marine environment, in particular to sea-water.

The fouling-release coating composition comprises a condensation-curable polysiloxane-based binder matrix constituting at least 40 % by dry weight of said coating composition, and more than 65 % by weight of the condensation-curable polysiloxane-based binder matrix is represented by polysiloxane parts.

*The polysiloxane-based binder matrix*

It should be understood that the polysiloxane-based binder matrix is made up of reactive polysiloxane binder components, e.g. functional organopolysiloxanes (such as polydialkylsiloxane, polyarylsiloxane, polyalkylaryl siloxane or combinations thereof), cross-linkers, silicates (e.g. ethyl silicate), and the like. Thus, it is believed that the reaction between such components will result in the binder matrix in the form of a typically three-dimensional covalently interconnected network. Hence, the polysiloxane-based binder matrix is cross-linked.

Curing of the fouling-release composition is performed by polymerization/cross-linking by formation of siloxane bonds through a condensation reaction. Condensation curing provides a binder matrix which consists solely of Si-O-Si repeating units in the backbone of said binder matrix.

The polysiloxane-based binder matrix is prepared from a polysiloxane based binder which is a functional organopolysiloxane, with terminal and/or pendant functionality. The terminal functionality is preferred. The functionality can either be hydrolysable groups, such as for example alkoxy groups, ketoxime groups or the functionality can be silanol groups. A minimum of two reactive groups per molecule is preferred. If the molecule contains only two reactive groups, for example silanol groups, it may be necessary to use an additional reactant, a cross-linker, to obtain the desired cross-link density. The cross-linker can for example be an alkoxy silane such as methyltrimethoxysilane, but a wide range of useful silanes are available as will be described further on. The silane can be used as it is or as hydrolysation-condensation products of same.

In some embodiments, the fouling-release coating composition (i.e. a composition for the preparation of the fouling-release coat) including the polysiloxane-based binder system may be a condensation-curable composition as will be evident for the person skilled in the art.

Examples hereof are a two-component condensation curing composition based on a silanol-reactive polydiorganosiloxane and a silane with hydrolysable groups, or a one-component condensation-curable composition based on a polydiorganosiloxane with alkoxy or other hydrolysable reactivity.

In one embodiment, the binder phase comprises (i) a binder and (ii) a cross-linking agent of which the binder (i) should include hydrolysable groups or other reactive groups so as to participate in the formation of the matrix.

The binder (i) typically constitutes 40-90 % by dry weight of the coating composition (and similarly by dry weight of the coat).

The cross-linking agent (ii) preferably constitutes 0-10 % by dry weight of the coating composition (and similarly by dry weight of the coat) and is, e.g., an organosilicon compound represented by the general formula (2) shown below, a partial hydrolysis-condensation product thereof, or a mixture of the two:

$$R_a\text{-Si-}X_{4-a} \qquad (2)$$

wherein, each R represents, independently, an unsubstituted or substituted monovalent hydrocarbon group of 1 to 6 carbon atoms or a hydrolysable group, each X represents, independently, a hydrolysable group, and a represents an integer from 0 to 2, such as from 0 to 1.

Within the art of polymer chemistry, it is well-known that the term 'partial hydrolysis-condensation product' refers to such compound wherein the compound has been allowed to react with itself in a condensation reaction creating oligomer or polymer. However such oligomers or polymers still retain the reactive/hydrolysable groups used in the cross-linking reaction.

The compound outlined in formula (2) acts as a cross-linker for the binder (i). The composition can be formulated as a one component curable RTV (room-temperature vulcanizable) by admixing the binder (i) and the cross-linking agent (ii). If the reactivity on the terminal Si-group of the binder (i) consist of readily hydrolysable groups, such as dimethoxy or trimethoxy, a separate cross-linker is usually not necessary to cure the film. The technology behind the curing mechanism and examples of cross-linkers is described in US 2004/006190.

In one embodiment, R represents a hydrophilic group such as a poly(oxyalkylene) group. In this case, it is preferred to have a $C_{2-5}$-alkyl spacer between the Si-atom and the poly(oxyalkylene) group. Hence, the organopolysiloxane may have oxyalkylene domains.

Preferred cross-linkers are those selected from tetramethoxysilane, tetraethoxysilane; tetrapropoxysilane; tetra-n-butoxysilane; vinyltris(methylethyloximino)silane; vinyltris-(acetoxime)silane; methyltris(methylethyloximino)silane; methyltris(acetoxime)silane; vinyltrimethoxysilane; methyltrimethoxysilane; vinyltris(isopropenoxy)silane; tetraacetoxysilane; methyltriacetoxysilane; ethyltriacetoxysilane; vinyltriacetoxysilane; di-t-butoxy-diacetoxysilane; methyltris(ethyllactate)silane and vinyltris(ethyllactate)silane as well as hydrolysis-condensation products of the same.

More preferred cross-linkers are tetraethoxysilane; vinyltris(methylethyloximino)silane; methyltris(methylethyloximino)silane; vinyltrimethoxysilane; methyltris(methylethyl-oximino)silane; methyltris(ethyllactate)silane vinyltris(ethyllactate)silane as well as hydrolysis-condensation products of the same.

More preferred cross-linkers are tetraethoxysilane; vinyltrimethoxysilane; methyltris(ethyl-lactate)silane; vinyltris(ethyllactate)silane, as well as hydrolysis-condensation products of the same. In a specific embodiment, said cross-linker is tetraethoxysilane or a hydrolysis-condensation product thereof. In another specific embodiment, said cross-linker is vinyltrimethoxysilane or a hydrolysis condensation product thereof. In yet another specific embodiment, said cross-linker is methyltris(ethyllactate)silane or a hydrolysis-condensation product thereof. In yet another specific embodiment, said cross-linker is vinyltris(ethyl-lactate)silane or a hydrolysis-condensation products thereof. In one further embodiment, said cross-linker is a hydrolysis-condensation product. In another embodiment, said cross-linker is not a hydrolysis-condensation product.

Other interesting cross-linkers are those selected from vinyltriethoxysilane, methyltriethoxysilane, ethyltrimethoxysilane, ethyltrimethoxysilane, tetraisopropoxysilane, tetrabutoxysilane as well as hydrolysis-condensation products of the same.

In some interesting embodiments, the polysiloxane-based binder comprises a polydimethylsiloxane-based

binder.

In other interesting embodiments, the binder may include fluoro-modifications, e.g. fluoroalkyl modified polysiloxane binders such as silanol-terminated poly(trifluoropropylmethylsiloxane).

The polysiloxane-based binder matrix typically constitutes at least 40 % by dry weight, at least 50 % by dry weight, preferably at least 60 % by dry weight, e.g. at least 70 % by weight, in particular 50-90 % by dry weight, or 50-98 % by dry weight, e.g. 50-96 % by dry weight, in particular 60-95 % by dry weight, or 50-95 % by dry weight, or 60-94 % by dry weight, or 70-96 % by dry weight, or even 70-94 % by dry weight, or 75-93 % by dry weight, or 75-92 % by dry weight, of the coating composition or of the cured coat (as the case may be).

The binder is in the form of a cross-linked matrix which incorporates other constituents, e.g. additives, pigments, fillers, biocides, etc., as well as any poly(oxyalkylene)-modified alcohol(s) (see below), any poly(oxyalkylene)-modified polysiloxane oil(s) (see below), sterically hindered amines (e.g.2,2,6,6,-tetraalkyl piperidine derivatives), in the fouling-release coat.

In some embodiments, the polysiloxane-based binder matrix may have included as a part of the binder matrix poly(oxyalkylene) chains (see also further below), e.g. as disclosed in WO2013/000478, such as terminal and/or pendant poly(oxyalkylene) chains, for example selected from polyoxyethylene, polyoxypropylene and poly(oxyethylene-co-oxypropylene).

The term "polysiloxane-based binder matrix" is intended to mean that the binder matrix mainly consists of polysiloxane parts, i.e. that more than 65 % by weight, preferably more than 70 % by weight, e.g. more than 75 % by weight, of the binder matrix is represented by polysiloxane parts. Preferably the polysiloxane parts constitute 65-100 % by weight, e.g. 65-99.9 % by weight, in particular 70-100 % by weight, or 70-99 % by weight, or 70-98 % by weight, or 75-97 % by weight, or even 75-99 % by weight, or 80-98 % by weight, or 90-97 % by weight, of the binder matrix (i.e. the binder components and any cross-linkers). The remainder of the binder matrix may e.g. - if present - be made of any poly(oxyalkylene) chains and any (non-polysiloxane-type) cross-linkers. In some important embodiments, the polysiloxane-based binder matrix consists only of polysiloxane parts and residues of any non-polysiloxane-type cross-linkers. Importantly, the term "polysiloxane-based binder matrix" is to be understood in the conventional sense, namely that the binder matrix has a backbone structure of polysiloxane parts. The term 'polysiloxane' is well-known to designate such polymers having a backbone in which atoms of silicon and oxygen alternate and which is devoid of carbon atoms (The New Encyclopedia Britannica in 30 volumes micropaedia volume IX. 1975 defining polysiloxane by referral to silicone). Similarly, the term polyorganosiloxane is intended to mean a polysiloxane backbone with organic (i.e. carbon-based) substituent on the silicon atoms.

When calculating the amount of the polysiloxane parts and any other parts, respectively, for a given starting material (or an adduct), it is typically fairly straightforward to distinguish between the two. However, in order to eliminate any doubt about any linkers between the two, it should be understood that any poly(oxyalkylene) chains (here mentioned as an example only) include all atoms up to, but not including, the silicon atom through which the moiety is covalently attached to the polysiloxane parts. As an example, in a structure of the type [polysiloxane-O]-Si(Me)$_2$-$CH_2CH_2CH_2$-[poly(oxyalkylene)], the [polysiloxane-O]-Si(Me)$_2$ part is accounted for as a silicone part, whereas the $CH_2CH_2CH_2$-[poly(oxyalkylene)] is accounted for as the poly(oxyalkylene) chain.

## Catalyst

The coating compositions used for forming the fouling-release coat may further comprise a condensation catalyst to accelerate the cross-linking. Examples of suitable catalysts include organometal- and metal salts of organic carboxylic acids, such as dibutyl tin dilaurate, dibutyl tin diacetate, dibutyl tin dioctoate, dibutyl tin 2-ethylhexanoate, dioctyl tin dilaurate, dioctyl tin diacetate, dioctyl tin dioctoate, dioctyl tin 2-ethylhexanoate, dioctyltin di neodecanoate, tin naphthenate, tin butyrate, tin oleate, tin caprylate, bismuth 2-ethylhexanoate, bismuth octanoate, bismuth neodecanoate, iron 2-ethylhexanoate, lead 2-ethyloctoate, cobalt-2-ethylhexanoate, manganese 2-ethylhexanoate, zinc 2-ethylhexanoate, zinc naphthenate, zinc stearate, cobalt naphthenate and titanium naphtenate; titanate- and zirconate esters such as tetrabutyl titanate, tetrakis(2-ethylhexyl)titanate, triethanolamine titanate, tetra(isopropenoxy)titanate, titanium tetrabutanolate, titanium tatrapropanolate; titanium tetraisopropanolate, zirconium tetrapropanolate, zirconium tetrabutanolate; chelated titanates such as diisopropyl bis(acetylacetonyl)titanate. Further catalysts include tertiary amines, such as triethylamine, tetrametylethylenediamine, pentamethyldiethylenetriamine and 1,4-ethylenepiperazine. Further examples include guanidine based catalysts. Even further examples of condensation catalysts are described in WO 2008/132196 and US 2004/006190.

The catalyst may be used alone or as combination of two or more catalysts. In one embodiment, said catalyst(s) are selected from the group consisting of tin and titanium oxide(s) (titanate(s)). In one specific embodiment, said catalyst is tin-based. In one embodiment, a catalyst is included, which is devoid of tin. In another embodiment, said catalyst comprises one or more titanium oxide(s) (titanate(s)). The amount of catalyst to be used is depending on the reactivity of the catalyst and the cross-linker(s) and desired drying time. In a preferred embodiment the catalyst concentration is

between 0.01-10 %, e.g. 0.01-3.0 %, or 5.0-10 %, or 0.1-4.0 %, or 1.0-6.0 %, by weight of the total combined amount of the binder (i) and cross-linking agent (ii).

In some embodiments, a catalyst is not included.

Solvents, additives, pigments and fillers

The coating composition used for forming the fouling-release coat may further comprise solvents and additives.

Examples of solvents are aliphatic, cycloaliphatic and aromatic hydrocarbons such as white spirit, cyclohexane, toluene, xylene and naphtha solvent, esters such as methoxypropyl acetate, n-butyl acetate and 2-ethoxyethyl acetate; octamethyltrisiloxane, and mixtures thereof. Alternatively, the solvent system may include water or be water-based (>50% water in the solvent system).

In one embodiment, the solvents are selected from aliphatic, cycloaliphatic and aromatic hydrocarbons such as white spirit, cyclohexane, toluene, xylene and naphtha solvent, esters such as methoxypropyl acetate, n-butyl acetate and 2-ethoxyethyl acetate; octamethyltrisiloxane, and mixtures thereof, preferably those solvents having a boiling point of 110 °C or more.

The solvents, if any, typically constitute 5-50 % by volume of the coating composition. It is understood that the final coat is substantially free from any solvents, because such constituents have evaporated during drying/curing of the coat.

Examples of additives are:

(i) non-reactive fluids such as organopolysiloxanes; for example polydimethylsiloxane, methylphenyl polysiloxane; petroleum oils and combinations thereof;
(ii) surfactants such as ethoxylated monoethanolamides of unsaturated fatty acids such as ethoxylated monoethanolamides of linoleic acid; sodium dodecyl sulfate; and soya lecithin;
(iii) wetting agents and dispersants such as those described in M. Ash and I. Ash, "Handbook of Paint and Coating Raw Materials, Vol. 1", 1996, Gower Publ. Ltd., Great Britain, pp 821-823 and 849-851;
(iv) thickeners and anti-settling agents (e.g. thixotropic agents) such as colloidal silica, hydrated aluminium silicate (bentonite), aluminium tristearate, aluminium monostearate, xanthan gum, chrysotile, pyrogenic silica, hydrogenated castor oil, organo-modified clays, polyamide waxes and polyethylene waxes;
(v) dyes such as 1,4-bis(butylamino)anthraquinone and other anthraquinone derivatives; toluidine dyes, etc.; and
(vi) antioxidants such as bis(tert-butyl) hydroquinone, 2,6-bis(tert-butyl) phenol, resorcinol, 4-tert-butyl catechol, tris(2,4-di-tert-butylphenyl)phosphite, pentaerythritol tetrakis(3-(3,5-di-tert-butyl-4-hydroxyphenyl)propionate), etc.

Any additives typically constitute 0-30 %, such as 0-15 %, by dry weight of the coating composition or of the cured coat (as the case may be).

Preferably, the coating composition comprises one or more thickeners and/or anti-settling agents (e.g. thixotropic agents), preferably in an amount of 0.2-10 %, such as 0.5-5 %, e.g. 0.6-4 %, by dry weight of the coating composition or of the cured coat (as the case may be). Furthermore, the coating composition used for forming the fouling-release coat may comprise pigments and fillers.

Pigments and fillers are in the present context viewed in conjunction as constituents that may be added to the coating composition with only limited implications on the adhesion properties. "Pigments" are normally characterised in that they render the final paint coating non-transparent and non-translucent, whereas "fillers" normally are characterised in that they do not render the paint non-translucent and therefore do not contribute significantly to hide any material below the coating.

Examples of pigments are grades of titanium dioxide, red iron oxide, zinc oxide, carbon black, graphite, yellow iron oxide, red molybdate, yellow molybdate, zinc sulfide, antimony oxide, sodium aluminium sulfosilicates, quinacridones, phthalocyanine blue, phthalocyanine green, black iron oxide, indanthrone blue, cobalt aluminium oxide, carbazole dioxazine, chromium oxide, isoindoline orange, bis-acetoacet-o-tolidiole, benzimidazolon, quinaphtalone yellow, isoindoline yellow, tetrachloroisoindolinone, quinophthalone yellow.

Examples of fillers are calcium carbonate such as calcite, dolomite, talc, mica, feldspar, barium sulfate, kaolin, nephelin, silica, perlite, magnesium oxide, and quartz flour, etc. Fillers (and pigments) may also be added in the form of nanotubes or fibres, thus, apart from the before-mentioned examples of fillers, the coating composition may also comprise fibres, e.g. those generally and specifically described in WO 00/77102.

Any pigments and/or fillers typically constitute 0-60 %, such as 0-50 %, preferably 5-45 %, such as 5-40 %, or 5-35 %, or 0.5-25 %, or 1-20 %, by dry weight of the coating composition or of the cured coat (as the case may be). Taking into account the density of any pigments and/or fillers, such constituents typically constitute 0.2-20 %, such as 0.5-15 % by solids volume of the coating composition or of the cured coat (as the case may be).

With the aim of facilitating easy application of the coating composition (e.g. by spray, brush or roller application

techniques), the coating composition typically has a viscosity in the range of 25-25,000 mPa·s, such as in the range of 150-15,000 mPa·s, in particular in the range of 200-4,000 mPa·s.

*Poly(oxyalkylene) chains*

The fouling-release coat and the tie-coat (and the corresponding coating compositions) comprise constituents having poly(oxyalkylene) chains. The nature of such poly(oxyalkylene) chains may be rather diverse in that the constituents having such poly(oxyalkylene) chains may be discrete molecules where the poly(oxyalkylene) chains constitutes one or more moieties, or the poly(oxyalkylene) chains may be covalently incorporated into the binder matrix, e.g as pendant or terminal groups.

In constituents having poly(oxyalkylene) chain(s), it should be understood that the poly(oxyalkylene) chain(s) include all atoms up to, but not including, the linking oxygen atom (or other linking heteroatom). As an example, in a structure of the type [polysiloxane-O]-Si(Me)$_2$-$CH_2CH_2CH_2$-[poly(oxyalkylene)] (like for the poly(oxyalkylene)-modified polysiloxanes and for the poly(oxyalkylene)-modified binder matrix described in detail below), the [polysiloxane-O]-Si(Me)$_2$- part is accounted for as a silicone part, whereas the -$CH_2CH_2CH_2$-[poly(oxyalkylene)] is accounted for as the poly(oxyalkylene) chain. As another example, in a structure of the type (poly(oxyalkylene)-O-)$_X$-R-(-O-FA)$_Y$ (like for the poly(oxyalkylene)-modified alcohols described in detail below), the -(-O-)$_X$-R-(-O-FA)$_Y$ part is accounted for as a the alcohol part, whereas the poly(oxyalkylene) is accounted for as the poly(oxyalkylene) chain.

Preferably, each of the above-mentioned poly(oxyalkylene) chains includes at least 3 repeating units, such as at least 5 repeating units. In many interesting embodiments, the chains include 3-1,000 repeating units, such as 3-200, or 5-150, or 5-100 repeating units. In another interesting embodiment the chains include 3-30 repeating units, such as 3-20 repeating units, such as 3 to 15 or even 4 to 12 repeating units. In yet another interesting embodiment the chains include 6 to 20 repeating units, such as 8 to 15 repeating units.

In most interesting embodiments, the poly(oxyalkylene) chains have a number average molecular weight ($M_n$) in the range of 100-50,000 g/mol, such as in the range of 100-30,000 g/mol, in particular in the range of 200-20,000 g/mol, or in the range of 200-10,000 g/mol. In other interesting embodiments the poly(oxyalkylene) chains have a number average molecular weight ($M_n$) in the range of 200-5,000 g/mol, such as 200-2,500 g/mol or even 300-1,000 g/mol.

The poly(oxyalkylene) chains are typically selected from poly(ethylene glycol) chains, polypropylene glycol) chains and poly(ethylene glycol-co-propylene glycol) chains). Examples of the latter are poly(ethylene glycol)-block-poly(propylene glycol), poly(ethylene glycol)-block-poly(propylene glycol)-block-poly(ethylene glycol), polypropylene glycol)-block-poly(ethylene glycol), polypropylene glycol)-block-poly(ethylene glycol)-block-polypropylene glycol), and poly(ethylene glycol-random-propylene glycol).

Poly(oxyalkylene)-modified polysiloxane oils

In one embodiment, constituent having poly(oxyalkylene) chains is selected from non-reactive poly(oxyalkylene)-modified polysiloxane oils. Examples of such poly(oxyalkylene)-modified polysiloxane oils of formula (A), (B) or (C) disclosed in WO 2014/117786 (see in particular pages 33-37 thereof).

Such poly(oxyalkylene)-modified polysiloxane oils are widely used as surfactants and emulsifiers due to the content of both hydrophilic and lipophilic groups in the same molecule. The poly(oxyalkylene)-modified silicone oils are non-reactive, i.e. the oils are selected so that they do not contain groups that can react with the binder or any individual binder components. Hence the poly(oxyalkylene)-modified silicone oils are intended to be non-reactive in particular with respect to the binder components such that the poly(oxyalkylene)-modified silicone oils do not become covalently linked to the binder, but instead are freely embedded into the binder film in which such silicone oils in principles may migrate more or less freely. In particular, the poly(oxyalkylene)-modified silicone oils are devoid of any reactive groups towards the polysiloxane binder components (or any cross-linkers) in accordance with the illustrative description of example of silicone oil (A), (B) and (C) further below. It is accepted that the silicone oils may carry "functional" groups, e.g. C-OH groups, as long as they do not in any significant way form any chemical reaction with the surrounding air or with any binder components or any additives contained in the coating composition at room temperature.

Of particular interest are those poly(oxyalkylene)-modified polysiloxane oils in which the relative weight of the poly(oxyalkylene) chains is 1 % or more of the total weight (e.g. 1-90 %), such as 5 % or more (e.g. 5-80 %), in particular 10 % or more (e.g. 10-70 %) of the total weight of the poly(oxyalkylene)-modified polysiloxane oil. In one embodiment the relative weight of the poly(oxyalkylene) chains is in the range of 25-60 %, such as 30-50 %, of the total weight of the poly(oxyalkylene)-modified polysiloxane oil.

In a preferred embodiment, the poly(oxyalkylene)-modified polysiloxane oil has a number average molecular weight ($M_n$) in the range of 100-100,000 g/mol, such as in the range of 250-75,000 g/mol, in particular in the range of 500-50,000 g/mol, or 500-30,000 g/mol.

In another preferred embodiment, the poly(oxyalkylene)-modified polysiloxane oil has a number average mo-

lecular weight ($M_n$) in the range of 500-20,000 g/mol, such as 1,000-10,000 g/mol, or 1,000-7,500 g/mol, or even 1,500-5,000 g/mol.

It is also preferred if the poly(oxyalkylene)-modified polysiloxane oils (if present) have a viscosity in the range of 10-20,000 mPa·s, such as in the range of 20-10,000 mPa·s, in particular in the range of 40-5,000 mPa·s.

In one variant hereof, the poly(oxyalkylene)-modified polysiloxane oil is a polysiloxane having grafted thereto poly(oxyalkylene) chains. An illustrative example of the structure of such poly(oxyalkylene)-modified silicone oils is formula (A):

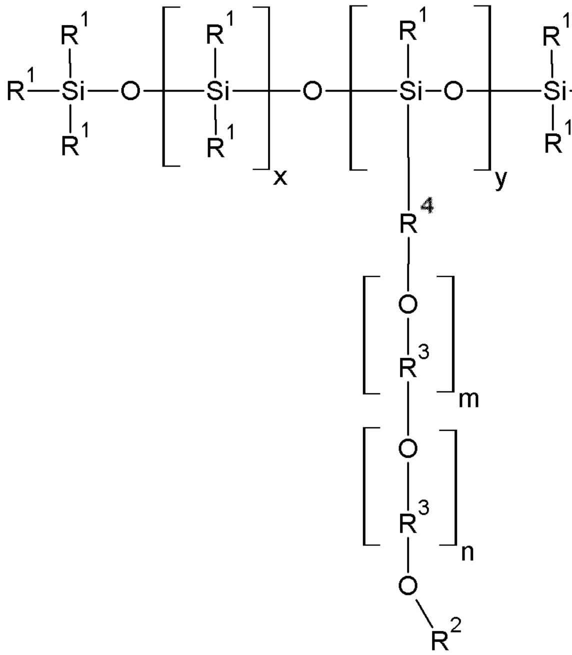

(A)

wherein

- each $R^1$ is independently selected from $C_{1-5}$-alkyl (including linear or branched hydrocarbon groups) and aryl (e.g. phenyl ($-C_6H_5$)), in particular methyl;
- each $R^2$ is independently selected from -H, $C_{1-4}$-alkyl (e.g. $-CH_3$, $-CH_2CH_3$, - $CH_2CH_2CH_3$, $-CH(CH_3)_2$, $-CH_2CH_2CH_2CH_3$), phenyl ($-C_6H_5$), and $C_{1-4}$-alkylcarbonyl (e.g. $-C(=O)CH_3$, $-C(=O)CH_2CH_3$ and $-C(=O)CH_2CH_2CH_3$), in particular -H and methyl;
- each $R^3$ is independently selected from $-CH_2CH_2-$ and $-CH_2CH(CH_3)-$;
- each $R^4$ is selected from $-(CH_2)_{2-6}-$;
- x is 0-2500, y is 1-100 and x+y is 1-2000;
- and n is 0-50, m is 0-50 and m+n is 1-70.

In an embodiment of formula (A) herein above, n+m includes 3 to 60 repeating units, such as 3 to 50 repeating units, such as 3 to 30 or even 4 to 20 repeating units. In yet another interesting embodiment n+m includes 6 to 40 repeating units, such as 8 to 30 or 10 to 25 repeating units.

In one specific embodiment of formula (A) hereinabove, x+y is less than 50 such as less than 30, or less than 20. In another specific embodiment, x+y includes 3 to 50 repeating units, such as 3 to 30 repeating units, such as 8 to 30, or such as 15-45, or such as 3 to 15, or even 4 to 12, repeating units. In yet another interesting embodiment x+y includes 6 to 20 repeating units, such as 8 to 15 repeating units.

In another variant hereof, the poly(oxyalkylene)-modified polysiloxane oil is a polysiloxane having incorporated in the backbone thereof poly(oxyalkylene) chains. An illustrative example of the structure of such poly(oxyalkylene)-modified silicone oils is formula (B):

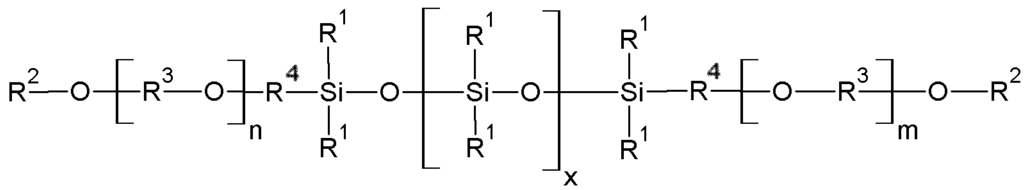

(B)

wherein

- each $R^1$ is independently selected from $C_{1-5}$-alkyl (including linear or branched hydrocarbon groups) and aryl (e.g. phenyl ($-C_6H_5$)), in particular methyl;
- each $R^2$ is independently selected from -H, $C_{1-4}$-alkyl (e.g. $-CH_3$, $-CH_2CH_3$, - $CH_2CH_2CH_3$, $-CH(CH_3)_2$, $-CH_2CH_2CH_2CH_3$), phenyl ($-C_6H_5$), and $C_{1-4}$-alkylcarbonyl (e.g. $-C(=O)CH_3$, $-C(=O)CH_2CH_3$ and $-C(=O)CH_2CH_2CH_3$), in particular -H and methyl;
- each $R^3$ is independently selected from $-CH_2CH_2-$ and $-CH_2CH(CH_3)-$;
- each $R^4$ is selected from $-(CH_2)_{2-6}-$;
- x is 1-2500; and
- n is 0-50, m is 0-50 and m+n is 1-70.

In an embodiment of formula (B) herein above, n+m includes 3 to 60 repeating units, such as 3 to 50 repeating units, such as 3 to 30 or even 4 to 20 repeating units. In yet another interesting embodiment n+m includes 6 to 40 repeating units, such as 8 to 30 or 10-25 repeating units.

In an embodiment of formula (B) herein above, x includes 3 to 1,000 repeating units, such as 3 to 200, or 5 to 150, or 5 to 100, repeating units, e.g. 5 to 50 repeating units. In another interesting embodiment x includes 3 to 30 repeating units, such as 3 to 20 repeating units, such as 3 to 15, or even 4 to 12, repeating units. In yet another interesting embodiment x includes 6 to 20 repeating units, such as 8 to 15 repeating units, or 8 to 50, or 10 to 45, or 20 to 40, repeating units.

In an embodiment of formula (B) herein above, n+m+x includes 3 to 120 repeating units, such as 3 to 100 repeating units, such as 3 to 80, or even 4 to 50, repeating units. In yet another interesting embodiment n+m+x includes 6 to 40 repeating units, e.g. 8 to 35 repeating units, such as 8 to 30 repeating units.

In an embodiment of formula (B) herein above, n+m+x includes 3 to 30 repeating units, such as 3 to 20 repeating units, such as 3 to 15, or even 4 to 12, repeating units. In yet another interesting embodiment n+m+x includes 6 to 20 repeating units, e.g. 8 to 25 repeating units, such as 8 to 15 repeating units.

In still another variant hereof, the poly(oxyalkylene)-modified polysiloxane oil is a polysiloxane having incorporated in the backbone thereof poly(oxyalkylene) chains and having grafted thereto poly(oxyalkylene) chains. An illustrative example of the structure of such poly(oxyalkylene)-modified silicone oils is formula (C):

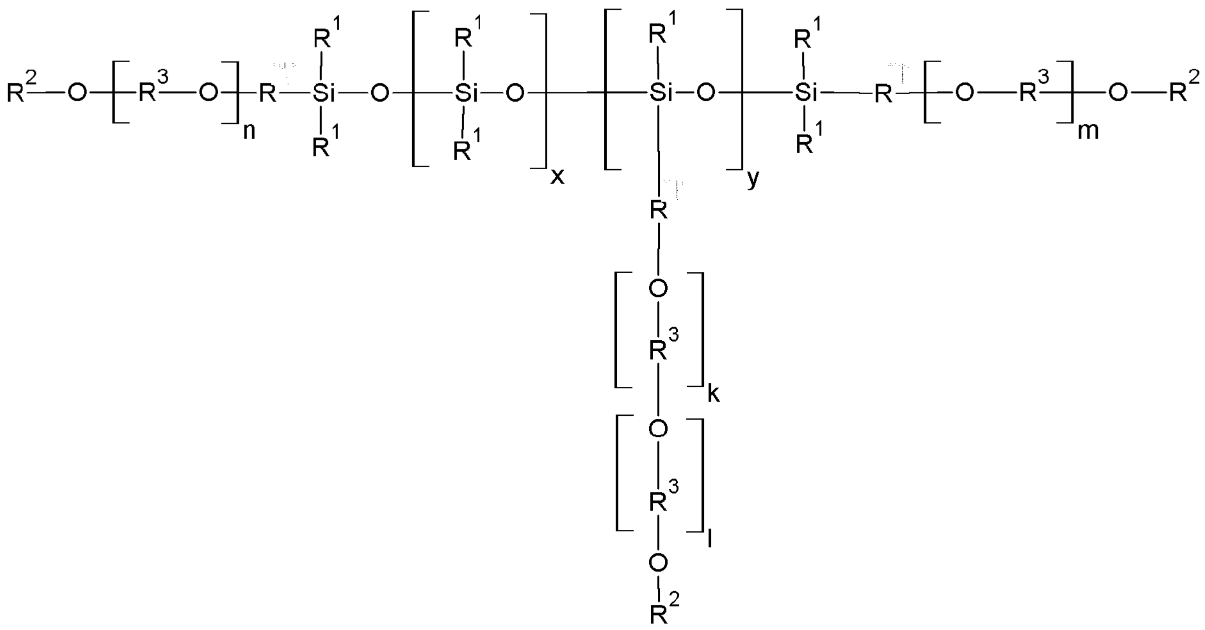

(C)

wherein:

- each $R^1$ is independently selected from $C_{1-5}$-alkyl (including linear or branched hydrocarbon groups) and aryl (e.g. phenyl ($-C_6H_5$)), in particular methyl;
- each $R^2$ is independently selected from -H, $C_{1-4}$-alkyl (e.g. $-CH_3$, $-CH_2CH_3$, $-CH_2CH_2CH_3$, $-CH(CH_3)_2$, $-CH_2CH_2CH_2CH_3$), phenyl ($-C_6H_5$), and $C_{1-4}$-alkylcarbonyl (e.g. $-C(=O)CH_3$, $-C(=O)CH_2CH_3$ and $-C(=O)CH_2CH_2CH_3$), in particular -H and methyl;
- each $R^3$ is independently selected from $-CH_2CH_2-$ and $-CH_2CH(CH_3)-$;
- each $R^4$ is selected from $-(CH_2)_{2-6}-$;
- x is 0-2500, y is 1-100 and x+y is 1-2000;
- k is 0-50, l is 0-50 and k+l is 1-50; and
- n is 0-50, m is 0-50 and m+n is 1-50.

In an embodiment of formula (C) herein above, n+m includes 3 to 60 repeating units, such as 3 to 50 repeating units, such as 3 to 30 or even 4 to 20 repeating units. In yet another interesting embodiment n+m includes 6 to 40 repeating units, such as 8 to 30 or 10-25 repeating units.

In an embodiment of formula (C) herein above, k+l includes 3 to 60 repeating units, such as 3 to 50 repeating units, such as 3 to 30 or even 4 to 20 repeating units. In yet another interesting embodiment k+l includes 6 to 40 repeating units, such as 8 to 30 or 10-25 repeating units.

In an embodiment of formula (C) herein above, x+y is less than 50 such as less than 30, or less than 20. In another specific embodiment, x+y includes 3 to 50 repeating units, such as 3 to 30 repeating units, such as 8 to 30, or such as 15-45, or such as 3 to 15, or even 4 to 12, repeating units. In yet another interesting embodiment x+y includes 6 to 20 repeating units, such as 8 to 15 repeating units.

In the above structures (A), (B) and (C), the groups $-CH_2CH(CH_3)-$, $-CH_2CH(CH_2CH_3)-$, etc. may be present in any of the two possible orientations. Similarly, it should be understood that the segments present x and y times typically are randomly distributed, or distributed as blocks, within the polysiloxane structure.

In these embodiments and variants, the poly(oxyalkylene) is preferably selected from polyoxyethylene, polyoxypropylene and poly(oxyethylene-co-oxypropylene), which sometimes are referred to as poly(ethylene glycol), polypropylene glycol) and poly(ethylene glycol-co-propylene glycol). Hence, in the above structures (A), (B) and (C), each $R^3$ linking two oxygen atoms is preferably selected from $-CH_2CH_2-$ and $-CH_2CH(CH_3)-$, whereas each $R^3$ linking a silicon atom and an oxygen atom preferably is selected from $C_{2-5}$-alkyl.

Preferably, the non-reactive poly(oxylalkylene)-modified polysiloxane oils are devoid of aromatic substituents.

It should be understood that the one or more non-reactive poly(oxylalkylene)-modified polysiloxane oils, if present, may be of different types, e.g. two or more of the types described above.

Interesting commercially available non-reactive poly(oxyalkylene)-modified silicone oils are, OFX-5103, OFX-190, OFX 5211, OFX-5247, OFX-3667, and OFX-193 (all from Xiameter), BYK-331 from BYK, DBE-621, CMS-222 from Gelest, CoatOSil 3501, Silwet 7280, CoatOSil 7210, CoatOSil 7200, CoatOSil 7602, CoatOSil 1220 (all from Momentive), TEGO Glide 410 and TEGO Glide 435 from Evonik industries, and KF945 from Shin-Etsu.

If present, the one or more poly(oxylalkylene)-modified polysiloxane oils are typically included in the coating composition (and in the cured coat) in an amount of 0.01-20 %, e.g. 0.05-10 %, by dry weight. In certain embodiments, the one or more poly(oxyalkylene)-modified polysiloxane oils constitutes 0.05-7 % by dry weight, e.g. 0.1-5 % by dry weight, in particular 0.5-3 % by dry weight, of the coating composition/cured coat. In certain other embodiments, the one or more poly(oxyalkylene)-modified polysiloxane oils constitutes 1-10 % by dry weight, e.g. 2-9 % by dry weight, in particular 2-7 % by dry weight, or 3-7 % by dry weight, or 3-5 % by dry weight, or 4-8 % by dry weight, of the coating composition/cured coat.

If poly(oxylalkylene)-modified polysiloxane oils are present in the coating composition (and in the cured coat), the poly(oxyalkylene) chains typically constitutes 0.005-10 %, e.g. 0.025-5 %, by dry weight. In certain embodiments, the poly(oxyalkylene) chains constitutes 0.025-3.5 % by dry weight, e.g. 0.05-2.5 % by dry weight, in particular 0.25-1.5 % by dry weight, of the coating composition/cured coat. In certain other embodiments, the poly(oxyalkylene) chains constitutes 0.5-5 % by dry weight, e.g. 1-4.5 % by dry weight, in particular 1-3.5 % by dry weight, or 1.5-3.5 % by dry weight, or 1.5-2.5 % by dry weight, or 2-4 % by dry weight, of the coating composition/cured coat.

Poly(oxyalkylene)-modified alcohols

In other embodiments, the constituent having poly(oxyalkylene) chains is selected from poly(oxyalkylene)-modified alcohols of the general formula (I):

$$(POA\text{-}O\text{-})_X\text{-}R\text{-}(\text{-}O\text{-}FA)_Y \qquad (I)$$

wherein

each POA represents a poly(oxyalkylene) moiety,
each FA represents a $C_{8-30}$ fatty acyl moiety,
R represents the organic residue of an alcohol $R(OH)_{X+Y}$, said organic residue having 2-50 carbon atoms, and
X is 1-5, Y is 0-10 and X+Y is 1-12.

In the above formula (I), -O- in connection with POA-O- represents an ether oxygen covalently linking the poly(oxyalkylene) and the organic residue of the alcohol. The fatty acyl moiety, FA, is a long chain acyl moiety forming an ester bond (-O-C(=O)-) together with the -O- of the -O-FA.

The organic residue is typically purely of hydrocarbon origin, i.e. consisting of linear, branched, cyclic, unsaturated and/or aromatic moieties, *except* that it may include 1-5 ether bonds (-C-O-C-) either being part of a ring structure or being attached directly to a ring structure. In some embodiments, the organic residue is of purely hydrocarbon origin.

In one embodiment, the organic residue, R, of the alcohol $R(OH)_{X+Y}$ has 2-50 carbon atoms, such as 3-50 carbon atoms, and has only linear, branched and/or unsaturated moieties.

In another embodiment, the organic residue, R, of the alcohol $R(OH)_{X+Y}$ has 2-50 carbon atoms, such as 3-50 carbon atoms, and is selected from substituted phenols, sorbitans or sterols.

The organic residue, R, such as in the before-mentioned embodiments, typically has 2-50 carbon atoms, e.g. 3-50 carbon atoms, or 6-50 carbon atoms, such as 8-45 carbon atoms, e.g. 9-40 carbon atoms, or 10-35 carbon atoms.

In the embodiments where X+Y is 1, the organic residue typically has 6-50 carbon atom.

Typically, the poly(oxyalkylene) moieties, POA, each represents an $R^1O\text{-}[R^2\text{-}O]_n\text{-}R^3\text{-}$ moiety wherein $R^1$ is selected from hydrogen, $C_{1-4}$-alkyl-C(=O)- and $C_{1-4}$-alkyl; each $R^2$ and $R^3$ is selected from ethyl-1,2-ene and propyl-1,2-ene; and n is an integer of 1-150.

The poly(oxyalkylene) moiety POA is typically a poly(oxyalkylene) moiety selected from polyoxyethylene, polyoxypropylene and poly(oxyethylene-co-oxypropylene).

In some interesting embodiments, n is ranging from 4-150, such as from 5-100, such as from 6-75, in particular 6-30.

In one embodiment, the poly(oxyalkylene) is selected from polyoxyethylene and poly(oxyethylene-co-oxypropylene), preferably from poly(oxyalkylenes), such as those having a number average molecular weight of 100-20,000 g/mol, such as 200-20,000 g/mol, in particular 300-5,000 g/mol.

In one variant hereof, the poly(oxyalkylene) is selected from polyoxyethylenes. Illustrative examples hereof are PEG-30 and PEG-75.

In another variant hereof, the poly(oxyalkylene) is selected from poly(oxyethylene-co-oxypropylene). Illustrative examples hereof are PEG-5/PPG-5 and PEG-10/PPG-3.5.

The fatty acids giving rise to the fatty acyl moieties, FA, upon partial esterification of the alcohol $R(OH)_{X+Y}$ are $C_{8-30}$ fatty acids, such as $C_{10-24}$ fatty acids. In some variants, the fatty acids may include one or more unsaturated bonds. Examples of fatty acids are stearic acid, lauric acid and oleic acid.

In formula (I), $(POA-O-)_X-R-(-O-FA)_Y$, X is 1-5, Y is 0-10 and X+Y is 1-12. In some embodiments, X is 1-5 and Y is 0. In other embodiments, X is 1 and Y is 1-10. In still other embodiments, X is 1-3 and Y is 1-5.

In some embodiments, the one or more poly(oxyalkylene)-modified alcohols have a melting point of 0-60 °C, such as 0-45 °C, in particular 0-30 °C.

In a further embodiments, the one or more poly(oxyalkylene)-modified alcohols have a surface tension above the critical micelle concentration in water of 20-55 mN/m, such as 25-50 mN/m, e.g. 25-45 mN/m, or 30-50 mN/m, preferably 30-45 mN/m. The surface tension is determined as described in the Examples section.

In one embodiment, the coat comprises 1-10 %, such as 2-8 %, in particular 3-7 %, by dry weight of said one or more poly(oxyalkylene)-modified alcohols.

In another embodiment, the coat comprises 1-10 %, such as 2-8 %, in particular 3-7 %, by solids volume of said one or more poly(oxyalkylene)-modified alcohols.

In still another embodiment, the coat (or a corresponding coating system) comprising 1-20, such as 2-18, in particular 3-16, $g/m^2$ of said one or more poly(oxyalkylene)-modified alcohols.

In one particular embodiment, the coat comprises one or more poly(oxyalkylene)-modified alcohols which include, or consist of, one or more poly(oxyalkylene)-modified sterols.

Sterols are terpene-derived compounds sharing the generic structure (II)

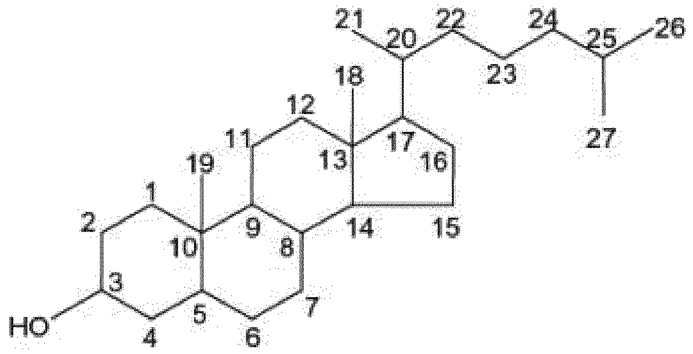

(II)

wherein the 3-position (in the A-ring) is hydroxy functional, and wherein (like in cholesterol) the 17-position typically carries a branched aliphatic chain (the chain $C^{20}$ to $C^{27}$ is provided as the most typical constitution). Other positions, like the 4-position, the 14-position, etc. may also carry substituents (typically methyl groups), just as the structure may contain ethylenically unsaturated double bonds, e.g. between carbons 5 and 6 like in cholesterol, or between carbon 8 and 9 like in lanosterol. Also, the sterol may have one or more hydroxy groups other than the hydroxy group in the 3-position.

In some embodiments, the sterol represents the alcohol R-OH, hence X+Y is 1.

The hydroxy group in the 3-position is available for functionalization, e.g. ether-modification such as by means of poly(oxyalkylenes) to provide poly(oxyalkylene)-modified sterols.

Poly(oxyalkylene)-modified sterols may be produced by reacting sterol alcohol with alkylene oxide, thereby polymerising polyalkylene oxide by ring opening polymerisation initiated by the alcohol. Typical sources of such sterols are Aqualose by Croda, Generol by BASF and Lipolan by Lipo chemicals. It has been found that functionalization of the 3-hydroxy group of sterols with poly(oxyalkylenes) provides compounds which are particularly useful in fouling-release coatings in combination with biocides, in particular organic biocides such as zinc pyrithione, copper pyrithione and Zineb.

In the present context, "poly(oxyalkylene)-modified sterols" should be understood as products predominantly consisting of sterols of the generic structure (II) being ether-functionalized at the 3-position with a poly(oxyalkylene) (i.e. -OH in the 3-position being replaced with POA-O-).

In the present context, the term "predominantly consisting of" means that at least 75 % by solids weight of the "poly(oxyalkylene)-modified sterols" consist of sterols of the generic structure (II) being ether-functionalized at the 3-position with a poly(oxyalkylene). Preferably, at least 80 %, such as at least 85, or at least 90 %, by solids weight of the "poly(oxyalkylene)-modified sterols" consist of such sterols. The less than 100 % content of the ether functionalised sterol of the generic structure (II) is due to the fact that many commercially available qualities of "sterols" comprises small amount of impurities.

Examples of poly(oxyalkylene)-modified sterols are Aqualose L30 and Polychol 20 (ex. Croda), PEG 75 Flake (ex. NK Chemicals).

In another particular embodiment, the alcohol $R(OH)_{X+Y}$ is selected from phenols.

Phenols are compounds of the generic structure (III):

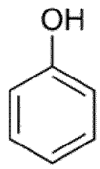

or

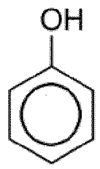

(III)

wherein the 1-position is hydroxy functional, and where the hydrogen at the 2, 3, 4, 5, or 6-position may be substituted with a linear, branched, cyclic, unsaturated and/or aromatic moiety, which further may carry fatty acyl moieties of the formula -O-FA as specified further above. In one interesting variant, the phenyl is substituted, in particular the 2-, 4- and 6-positions are each substituted, for example with a styryl, a nonyl and/or a butyl group. Hence, in these latter cases, the alcohol may be selected from tristyrylphenol, nonylphenol and tributylphenol.

The hydroxy group in the 1-position is available for functionalization as specified further above by means of poly(oxyalkylenes) to provide poly(oxyalkylene)-modified phenols.

Examples of phenol-based compounds are Sapogenat T 080 (ex. Clariant ) and Serdox NSP 14 (ex. Croda).

In still another particular embodiment, the alcohol $R(OH)_{X+Y}$ is a sorbitan. Sorbitan is a compound of the generic structure (IV):

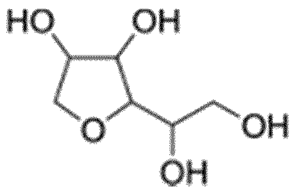

(IV)

and corresponds to an alcohol of the general formula $R(OH)_4$. Sorbitan may be modified by partial esterification of up to three of the four -OH group by fatty acids leaving one or more - OH groups unmodified and available for poly(oxyalkylene) modification. In some embodiments of the formula (I), $(POA-O-)_X-R-(-O-FA)_Y$, X is 1-3, Y is 1-3 and X+Y is 4, such as where X is 1-2, Y is 2-3, and X+Y is 4.

In a specific embodiment, the poly(oxyalkylene)-modified sorbitan is based on sorbitan trioleate, leaving only one -OH group available for functionalization as specified further above by means of poly(oxyalkylenes) to provide poly(oxyalkylene)-modified sorbitan trioleate, i.e. X is 1 and Y is 3.

In still another particular embodiment, the alcohol is selected from $C_{6-30}$ saturated straight or branched chain alcohols, such as saturated straight chain primary alcohols and saturated branched chain secondary or tertiary alcohols. The hydroxy group is available for functionalization, e.g. ether-modification such as by means of poly(oxyalkylenes) to provide poly(oxyalkylene)-modified $C_{6-30}$ alcohols, e.g. straight chain primary alcohols and poly(oxyalkylene)-modified branched chain secondary and/or tertiary alcohols. In some embodiment, such alcohols have 8-30 carbon atoms, such as 10-24 carbon atoms.

Specific examples of the above-mentioned alcohols are $C_{8-30}$ alkylalcohols, such as $C_{10-15}$ saturated straight chain primary alcohols, branched $C_{13}$ alcohols, and oleyl alcohol.

An example of such an alcohol is Tween 85, ex. Croda.

It should be understood that the above embodiments may be viewed independently or in combination. Hence, the one or more poly(oxyalkylene)-modified alcohols may be represented by different of the types specified above or by several variants within the same type.

If present, the one or more poly(oxylalkylene)-modified alcohols are typically included in the coating composition (and in the cured coat) in an amount of 0.01-20 %, e.g. 0.05-10 %, by dry weight. In certain embodiments, the one or more poly(oxyalkylene)-modified alcohols constitutes 0.05-7 % by dry weight, e.g. 0.1-5 % by dry weight, in particular 0.5-3 % by dry weight, of the coating composition/cured coat. In certain other embodiments, the one or more poly(oxyalkylene)-modified alcohols constitutes 1-10 % by dry weight, e.g. 2-9 % by dry weight, in particular 2-7 % by dry weight, or 3-7 % by dry weight, or 3-5 % by dry weight, or 4-8 % by dry weight, of the coating composition/cured coat.

If poly(oxylalkylene)-modified alcohols are present in the coating composition (and in the cured coat), the poly(oxyalkylene) chains typically constitutes 0.005-10 %, e.g. 0.025-5 %, by dry weight. In certain embodiments, the poly(oxyalkylene) chains constitutes 0.025-3.5 % by dry weight, e.g. 0.05-2.5 % by dry weight, in particular 0.25-1.5 % by dry weight, of the coating composition/cured coat. In certain other embodiments, the poly(oxyalkylene) chains constitutes 0.5-5 % by dry weight, e.g. 1-4.5 % by dry weight, in particular 1-3.5 % by dry weight, or 1.5-3.5 % by dry weight, or 1.5-2.5 % by dry weight, or 2-4 % by dry weight, of the coating composition/cured coat.

Poly(oxyalkylene) modification of the binder matrix

In one variant, the binder matrix has covalently included as a part thereof poly(oxyalkylene) chains. If present, such poly(oxyalkylene) chains preferably make up 1-30 % by weight, such as 2-20 % by weight, e.g. 1-10 % by weight, of the binder matrix.

It should of course be understood that the poly(oxyalkylene) chains which are included in the polysiloxane-based binder matrix are of non-silicon origin.

In one embodiment, the binder includes a curable diorganopolysiloxane represented by a general formula (1) shown below:

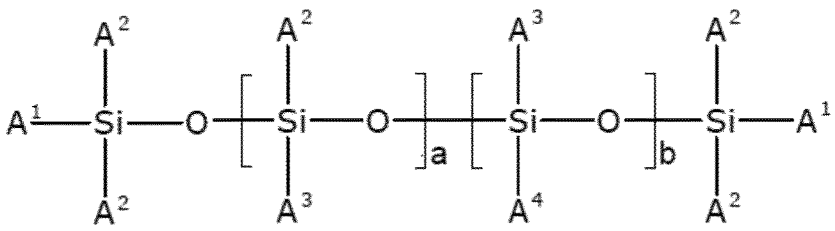

(1)

wherein each $A^1$ is independently selected from a hydroxyl group, a hydrolysable group and another functional group, such as amine or epoxy; each $A^2$ is independently selected from alkyl, aryl, alkenyl and a hydrolysable group; each $A^3$ and $A^4$ is independently selected from alkyl, aryl alkenyl and a poly(oxyalkylene) group, wherein, if $A^3$ and/or $A^4$ is a poly(oxyalkylene) group, such group may be attached to the silicon atom via a $C_{2-5}$-alkylene linker; a = 1-25,000, b = 1-2,500 and a+b is at least 5.

In one alternative embodiment, the binder includes a curable diorganopolysiloxane represented by a general formula (1x) shown below:

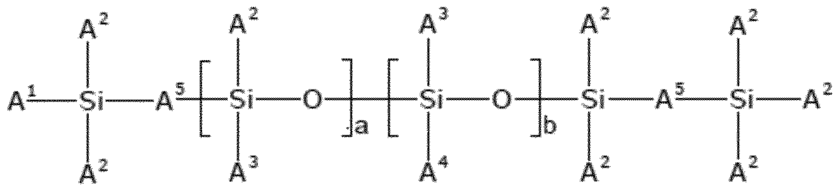

(1x)

wherein each of $A^1$, $A^2$, $A^3$, $A^4$, a and b are as above for formula (1) and wherein each $A^5$ is independently selected from oxygen or an alkyl group of 2-5 carbon atoms.

In another embodiment, the polysiloxane binder has poly(oxyalkylene) chains grafted as side chains (pendant groups), as depicted below, and can be prepared by a hydrosilylation reaction between a hydride functional polysiloxane and a poly(oxyalkylene) component containing an unsaturated group ($-CH=CH_2$) such as for example an allyl or vinyl group, in presence of a hydrosilylation catalyst, such as platinum, in accordance with formula (1c), where the example of a poly(oxyalkylene) compound is an allyl-terminated poly(ethylene glycol). The synthesis is carried out at elevated temperatures, such as 60-150°C. To render the polymer curable, it is necessary to functionalise it with a hydrolysable, or by other means reactive, group, such as vinyltrimethoxysilane. The reaction is following same principles as when grafting the poly(oxyalkylene) chains to the polysiloxane, and it is outlined in formula (1b), and the functionalization may be done, but not necessarily, prior to the bonding of a poly(oxyalkylene) group.

The resulting binder from the reaction (1b) is further modified with a poly(ethylene glycol) mono allyl ether as outlined in formula (1c) resulting in a curable, polysiloxane modified with poly(oxyalkylene) chains.

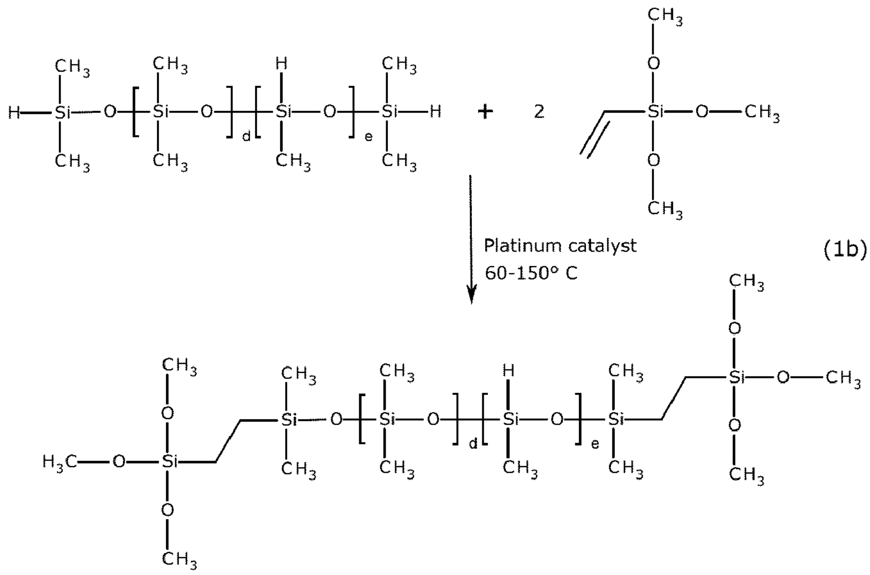


(1b)

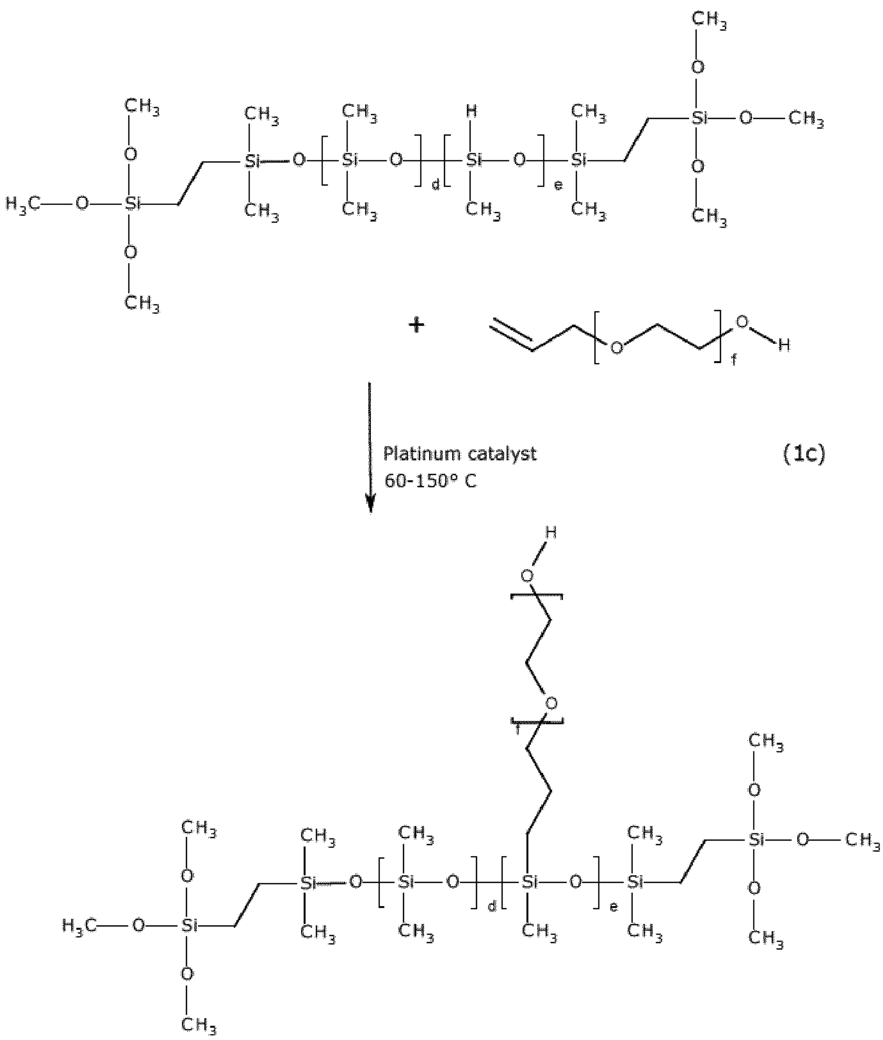


(1c)

(1f)

The binder obtained can be used as it is, or in combination with a curable diorganosiloxane (of the generic type presented in formula 1).

It is possible to graft the poly(oxyalkylene) chains to the polysiloxane prior to grafting the hydrolysable silane

to the polysiloxane (i.e. in reverse order than the synthesis described in formulae (1b) and (1c).

Hence, in one interesting embodiment, the cured paint coat comprising a polysiloxane-based binder matrix has included as a part thereof pendant poly(oxyalkylene) chains.

The expression "pendant" means that the poly(oxyalkylene) chains are attached to the polysiloxane backbone at a non-terminal position and that such moieties are attached at only the one end so that the pendant poly(oxyalkylene) chains form a "graft" to the polysiloxane backbone (matrix). This is can also be referred to as "branched".

Pendant poly(oxyalkylene) chains may in principle at the free end carry functional (non-reactive) groups at the free end, e.g. groups exhibiting a biocidal effect, etc. However, in most embodiments, the poly(oxyalkylene) chains are not carrying such functional groups, but are in the form of the native poly(oxyalkylene) form, possibly end-capped, like with an alkyl group, or possibly with a hydroxyl group or methoxy terminated.

Another variation of the binder is an A-B-A copolymer of polysiloxane (A) and a poly(oxyalkylene) polymer (B). An example of the structure of the polymer is depicted in formula (1d). In this variation, units of a poly(oxyalkylene) polymer are introduced in the backbone of the polysiloxane to form an alternating block copolymer. Introducing poly(oxyalkylene) groups in the binder may increase the hydrophilicity of the binder as described in reference WO 2008/132196. The binders can be used alone or in combination, and the structure of the copolymer can be A-B-A and B-A-B. In case of B-A-B, a pendant curable functionality is required, since the terminal groups of the silicone portion would be blocked by the poly(oxyalkylene) chains.

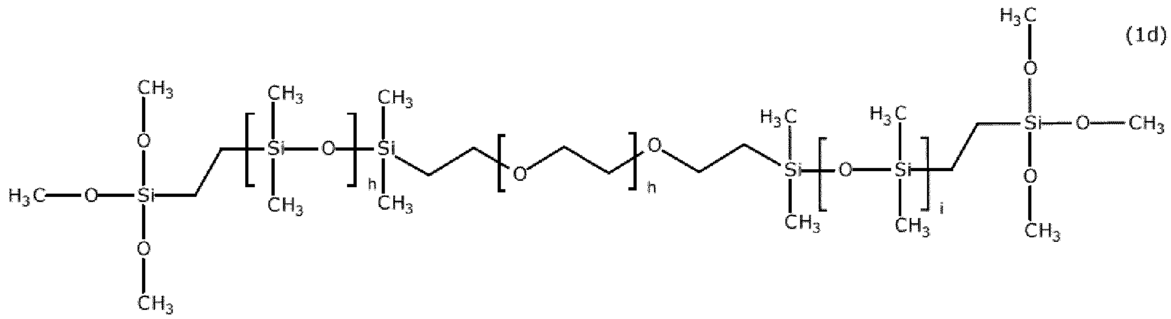

(1d)

In yet another variant, the poly(oxyalkylene) chains are obtained by hydrosilylation of a poly(oxyalkylene) compound containing at least one, unsaturated group ($-CH=CH_2$) such as an allyl or a vinyl group, with a silane having a hydride group, e.g. $HSi(R^*)_3$ groups, wherein each R* independently is selected from $C_{1-4}$-alkyl and $C_{1-4}$-alkoxy (e.g. methyl, ethyl, propyl, butyl, methoxy, ethoxy, propoxy, and butoxy), at least one being $C_{1-4}$-alkoxy, such as for example trimethoxysilane, triethoxysilane or methyldimethoxysilane, in the presence of a hydrosilylation catalyst, such as platinum, yielding a curable poly(oxyalkylene). The reaction is carried out at elevated temperatures, such as 60-150°C. The synthesis is outlined in formula (1e). The polymer has to be used in combination with, e.g., component (i) (formula 1). Further examples of useful silanes include, without being limited to, triethoxysilane, tripropoxysilane, tert-butyldiethoxysilane.

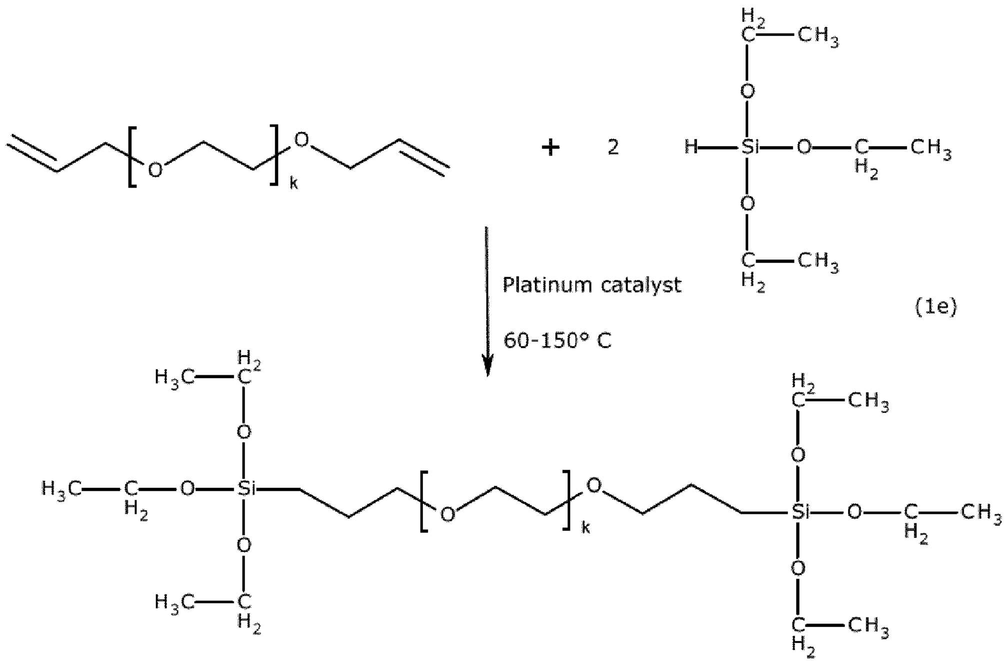


(1e)

(1g)

In one variant, the hydrophilicity may be obtained (or added to the hydrophilicity which may have been obtained by incorporating a poly(oxyalkylene) chains to binder (i) as outlined in previous section), by using a poly(oxyalkylene) silane, such as the generic type expressed in formula (2a). The poly(oxyalkylene) silane will react with the silanol or the poly(oxyalkylene) chains in the binder component (formulae (1) or (1e)), and thereby incorporate poly(oxyalkylene) chains.

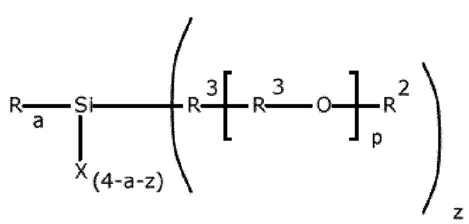

(2a)

wherein,

- each R represents, independently, an unsubstituted or substituted monovalent hydrocarbon group of 1 to 6 carbon atoms or a hydrolysable group,
- each X represents, independently, a hydrolysable group,
- each $R^2$ is independently selected from -H, $C_{1-4}$-alkyl (e.g. $-CH_3$, $-CH_2CH_3$, $-CH_2CH_2CH_3$, $-CH(CH_3)_2$, $-CH_2CH_2CH_2CH_3$), phenyl ($-C_6H_5$), and $C_{1-4}$-alkylcarbonyl (e.g. $-C(=O)CH_3$, $-C(=O)CH_2CH_3$ and $-C(=O)CH_2CH_2CH_3$), in particular -H and methyl;
- each $R^3$ is independently selected from $C_{2-5}$-alkylene (e.g. $-CH_2CH_2-$, $-CH_2CH(CH_3)-$, $-CH_2CH_2CH_2-$, $-CH_2CH_2CH_2CH_2-$, $-CH_2CH(CH_2CH_3)-$), arylene (e.g. 1,4-phenylene) and $C_{2-5}$- alkylene substituted with aryl (e.g. 1-phenyl ethylene), in particular from $C_{2-5}$-alkylene such as $-CH_2CH_2-$ and $-CH_2CH(CH_3)-$);
- p is 3-50;
- a is 0-2;
- z is 1-3.

Introducing oxyalkylene units in the organopolysiloxane will increase the hydrophilicity of the binder, especially when ethyleneoxide type $-[CH_2CH_2-O]-$ is used.

In a further embodiment, the poly(oxyalkylene) modification of the binder consists of both A-B-A modifications (as described above) and of pendant poly(oxyalkylene) chains.

It should be understood that the poly(oxyalkylene) chains forms a part of the polysiloxane-based binder matrix, i.e. that the moieties are covalently incorporated into the binder matrix. It should also be understood that the formed

covalent bond(s) preferably are non-hydrolysable.

It should of course be understood that the poly(oxyalkylene) chains which are included in the polysiloxane-based binder matrix are of non-silicon origin.

Incorporation of the above mentioned poly(oxyalkylene) chains into the polysiloxane polymer backbone is typically done through a linking group. The linking group is understood as the product of the reaction of two mutually reaction functional groups; one functional group on the polysiloxane backbone and one on the poly(oxyalkylene) chain. E.g. an amine linking group is result of for example - but not exclusively - the reaction of a glycidyl ether with a primary or secondary amine. Examples of useful linking groups between the poly(oxyalkylene) chains and the polysiloxane backbone are: amine groups, ether groups, amide groups. 1,2,3-triazole, C-C bonds, C-C double bonds, C-C triple bonds, Si-C bonds, C-S bonds, S-S bonds, urethane group, urea groups. Most preferred linking group is the Si-C bond prepared by hydrosilylation reaction catalyzed by platinum where the functional group on the polysiloxane backbone is a hydride and the functional group on the poly(oxyalkylene) chain is an allyl group.

In some embodiments, it is preferred that the poly(oxyalkylene) chains provide a permanent hydrophilic contribution to the binder matrix. Hence, in such embodiments, the poly(oxyalkylene) chains are preferably devoid of any bonds which are hydrolysable in sea-water. Hence, preferably, the poly(oxyalkylene) chains do not include ester bonds or acid anhydride bonds.

When the polysiloxane-based binder system discussed above is characterized by having included therein, as a part of the binder matrix, one or more polysiloxane components which are modified with poly(oxyalkylene) chains, such polysiloxane components will upon reaction with other polysiloxane components and cross-linkers provide hydrophilic properties to the binder system. Alternatively, poly(oxyalkylene) chains functionalized with reactive silanes which enable them to react with the polysiloxane binder, or the poly(oxyalkylene) chains, and form a non-hydrolysable bond, may also be used.

The polysiloxane components must include silicon-reactive groups such as Si-OH groups, hydrolysable groups such as Si-OR (such as alkoxy, oxime, acetoxy etc.) groups, etc., so as to facilitate reaction with other constituents of the polysiloxane-based binder system.

If poly(oxylalkylene)-modified chains are present as covalently linked to the binder matrix in the coating composition (and in the cured coat), the poly(oxyalkylene) chains typically constitutes 1-30 %, e.g. 2-25 %, by dry weight. In certain embodiments, the poly(oxyalkylene) chains constitutes 3-20 % by dry weight, e.g. 5-20 % by dry weight, in particular 6-17 % by dry weight, of the coating composition/cured coat. In certain other embodiments, the poly(oxyalkylene) chains constitutes 3-15 % by dry weight, e.g. 4-12 % by dry weight, in particular 3-10 % by dry weight, or 4-9 % by dry weight, or 5-10 % by dry weight, or 7-12 % by dry weight, of the coating composition/cured coat.

*Sterically hindered amines*

A mandatory component of the fouling-release coat and/or the tie-coat (and corresponding coating composition) is the one or more sterically hindered amine (in particular 2,2,6,6-tetraalkyl piperidine derivatives). The present inventors have found that the hindered amine moieties (e.g. 2,2,6,6-tetraalkyl piperidine moieties) of such sterically hindered amines when used in combination with constituents comprising poly(oxyalkylene) chains improves the antifouling performance of the immersed polysiloxane-based fouling release coat/system.

In one embodiment, the sterically hindered amine is present in the tie-coat composition and coat. In another embodiment, the sterically hindered amine is present in the fouling-release composition and coat.

It appears that the existence of the sterically hindered amine motif (e.g. a 2,2,6,6-tetraalkyl piperidine motif) plays an important role for the functionality of the sterically hindered amines. Otherwise, it is envisaged that a broad range of derivatives are applicable, including those present as discrete molecule, those being part of oligomeric or polymeric structures and those being covalently incorporated into the binder matrix.

In accordance with the invention, the sterically hindered amine(s) comprise hindered amine moieties of general formula I:

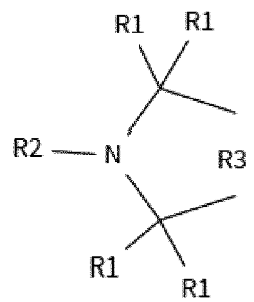

wherein

each R1 is independently linear or branched $C_1$-$C_4$ alkyl, preferably methyl;

R2 is selected from -H, optionally substituted linear or branched $C_{1-30}$-alkyl, optionally substituted linear or branched $C_{2-30}$-alkenyl, optionally substituted aryl, -OH (corresponding to N-O•), optionally substituted linear or branched $C_{1-30}$-alkoxy, optionally substituted linear or branched $C_{1-30}$-alkenyloxy, optionally substituted aryloxy, optionally substituted linear or branched $C_{1-30}$-alkylcarbonyl, optionally substituted linear or branched $C_{1-30}$-alkenylcarbonyl, and optionally substituted arylcarbonyl;

R3 is an optionally substituted divalent group forming an N-heterocyclic 5-, 6- or 7-membered ring together with the intervening $-C(R1)_2-N(R2)-C(R1)_2-$ group;

and wherein the R2 and/or R3 with the before-mentioned meanings may be linked to one or more hindered amine moieties each independently having the General Formula I. Preferably R1 is methyl.

In some embodiments, R2 is selected from optionally substituted $C_{1-30}$-alkyl, optionally substituted $C_{1-30}$-alkenyl, optionally substituted aryl, -OH, optionally substituted $C_{1-30}$-alkoxy, optionally substituted $C_{1-30}$-alkenyloxy, optionally substituted aryloxy, optionally substituted $C_{1-30}$-alkylcarbonyl, optionally substituted $C_{1-30}$-alkenylcarbonyl, and optionally substituted arylcarbonyl, in particular optionally substituted $C_{1-30}$-alkyl, optionally substituted $C_{1-30}$-alkenyl, optionally substituted aryl, optionally substituted $C_{1-8}$-alkoxy, optionally substituted $C_{1-8}$-alkenyloxy, optionally substituted aryloxy, optionally substituted $C_{1-8}$-alkylcarbonyl, optionally substituted $C_{1-8}$-alkenylcarbonyl, and optionally substituted arylcarbonyl.

In another embodiment, R2 is selected from $C_{1-4}$-alkyl, $C_{1-4}$-alkoxy, $C_{1-4}$-alkylcarbonyl.

In some embodiments, R3 is selected from $-CH_2-C(\sim)-CH_2-$ (corresponding to piperidine) and $-CH_2-N(\sim)-CH_2-$ (corresponding to piperazine), in particular $-CH_2-C(\sim)-CH_2-$, where "~" designates hydrogen atom(s) and/or the attachment point(s) for a substituent, a linker, a scaffold, a dendrimer, or a polymer, or the like.

In certain embodiments, R3 is selected from $-CH_2-C(R4)-CH_2-$ (corresponding to piperidine) and $-CH_2-N(R4)-CH_2-$ (corresponding to piperazine), in particular $-CH_2-C(R4)-CH_2-$, where R4 is as defined (generally and specifically) below for general formula II.

It is currently preferred that R2 should not be -H, because the presence of a secondary amine in the fouling-release composition/tie-coat composition leading to the fouling-release coat will have detrimental effect on the formation of the polysiloxane-based binder matrix.

Also, it is believed that R2 should preferably not be selected from -H and -OH.

In some embodiments, the sterically hindered amines are discrete molecules including only one hindered amine moiety, in particular a piperidine moiety of general formula II (below).

In other embodiments, the sterically hindered amines are oligomers including, e.g. 2-20, hindered amine moieties, in particular piperidine moieties of general formula II (below). In variants hereof, the moieties are linked together.

In still other embodiments, the sterically hindered amines are polymers oligomers including, e.g. 5-200, hindered amine moieties, in particular piperidine moieties of general formula II (below), as repeating backbone moieties or repeating grafted moieties of a polymer structure.

In variants of the before-mentioned, the sterically hindered amines are immobilized to the polysiloxane-based binder matrix.

More particularly, the sterically hindered amine(s) are selected from 2,2,6,6-tetraalkyl piperidine derivatives, i.e. the hindered amine moieties are 2,2,6,6-tetraalkyl piperidine moieties of general formula II:

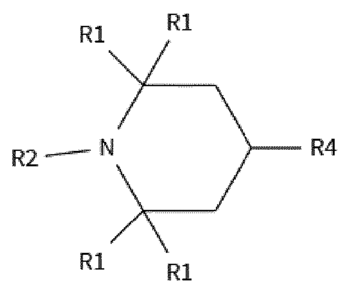

wherein R1 and R2 are defined as above; and R4 represents hydrogen atom(s) and/or the attachment point(s) for a polymer.

In some variants, a substituent as R4 is selected from those substituents defined as substituents to heterocyclyl further below.

In some embodiment, R4 represents zero (where the 4-position of the piperidine is unsubstituted), one or two

substituents selected from $C_{1-30}$-alkyl, $C_{1-30}$-alkenyl, aryl, hydroxy, $C_{1-30}$-alkoxy, $C_{1-30}$-alkenyloxy, aryloxy, $C_{1-30}$-alkylcarbonyl, $C_{1-30}$-alkenylcarbonyl, arylcarbonyl, $C_{1-30}$-alkylcarbonyloxy, $C_{1-30}$-alkenylcarbonyloxy, and arylcarbonyloxy; and wherein the substituent R4 with the before-mentioned meanings may be linked to one or more hindered amine moieties each independently having the General Formula II.

In some embodiments, R4 is selected from $C_{1-30}$-alkyl, $C_{1-30}$-alkenyl, aryl, $C_{1-30}$-alkoxy, $C_{1-30}$-alkenyloxy, aryloxy, $C_{1-30}$-alkylcarbonyl, $C_{1-30}$-alkenylcarbonyl, arylcarbonyl, $C_{1-30}$-alkylcarbonyloxy, $C_{1-30}$-alkenylcarbonyloxy, and arylcarbonyloxy, in particular from $C_{1-8}$-alkoxy, $C_{1-8}$-alkenyloxy, aryloxy, $C_{1-8}$-alkylcarbonyloxy, $C_{1-8}$-alkenylcarbonyloxy, and arylcarbonyloxy.

In other embodiments, R4 represents two substituents forming a spiro structure, e.g. a spiro structure of a heterocyclyl nature. The term "spiro" has its regular meaning in organic chemistry; i.e. two or more rings which share a common atom.

Variants of sterically hindered amines, such as 2,2,6,6-tetraalkyl piperidine derivatives, are very abundant in the literature and from commercial sources. Due to the fact that e.g. 2,2,6,6-tetraalkyl piperidine as a discrete molecule migrates readily in polysiloxane-based coatings, it is desirable to modify the tendency to migrate by structural derivatisation, e.g. so as to modify the water solubility, and/or by increasing the molecular weight (thereby reducing the mobility), or even by covalent immobilisation of the sterically hindered amine moiety (e.g. piperidine moiety).

In one embodiment, the sterically hindered amine moieties are present within discrete molecules.

In another embodiment, the sterically hindered amine moieties are present as part of an oligomeric or polymeric structure.

In yet another embodiment, the sterically hindered amine moieties are present as immobilised to the binder matrix.

Hence, in the following will for illustrative purposes be presented various examples of 2,2,6,6-tetraalkyl piperidine derivatives.

In some embodiments, the piperidine derivatives are present as discrete molecules.

In other embodiments, the piperidine derivatives are those being part of an oligomeric or polymeric structure.

In one variant, the such oligomeric/polymeric piperidine derivatives are e.g. those of (meth)acrylate nature disclosed in WO 2016/105974 and which have the formula $(R^b)_m$-$R^a$-NH-C(=O)-L-X, wherein

X is

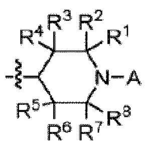

;

$R^1$, $R^2$, $R^7$ and $R^8$ are independently selected from $C_{1-4}$-alkyl, preferably methyl;

$R^3$, $R^4$, $R^5$ and $R^6$ are independently selected from hydrogen and $C_{1-4}$-alkyl, preferably hydrogen;

A is selected as R3 above for general formula I and general formula II, preferably not N-H;

L is selected from -O- and a single bond, preferably -O-;

m is in integer of 1 to 6;

$R^a$ is a connecting group having a valence of m+1, preferably $C_{1-6}$-alkylene or a hydrocarbon polyradical;

$R^b$ is an (alkyl)acryloyloxy functional group of the formula O-C(=O)-C($R^d$)=$CH_2$ wherein $R^d$ is methyl or hydrogen.

In another variant, the piperidine derivative(s) are independently selected from polymers comprising the following segments:

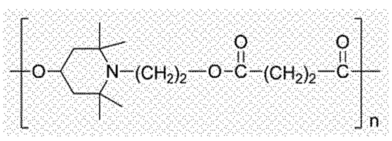

wherein n designates an integer of 3-100.

Illustrative examples of commercial sterically hindered amines of the 2,2,6,6-tetramethyl piperidine type are: Sabostab UV 65 (N-$CH_3$), Sabostab UV 40 (N-H), Sabostab UV 79 (N-H) from Sabo S.p.A.; Hostavin 3058 (N-Acyl), Hostavin 3070 (Oligomeric) from Clariant; Tinuvin 622 (Oligomeric), Tinuvin 144 (N-$CH_3$), Flamestab NOR 116 (N-O-R), Chimassorb 944 (N-H), Tinuvin 249 (N-O-R), Tinuvin 440 (N-Acyl), Tinuvin 152 (N-O-R), Tinuvin 123 (N-O-R), Uvinul

4050 H (N-H), Lignostab 1198 (N-O•, monomer), Uvinul 5050 H (N-H, polymeric) from BASF; ADK STAB LA-52 (N-$CH_3$), ADK STAB LA-68 (N-H), ADK STAB LA-82 (N-$CH_3$) from Adeka Palmarole; and UBS-0822 (N-H, siloxane), UBS-0541 (N-H, siloxane) from Gelest.

Typically, the sterically hindered amine(s), e.g. piperidine derivative(s), are present in a total amount of 0.05-10 %, such as 0.08-8 %, or such as 0.1-7 %, such as 0.12-5 %, in particular 0.15-3 %, by dry weight of said coat (or coating composition).

Because it is believed that the sterically hindered amine motif, e.g. the 2,2,6,6-tetraalkyl piperidine motif, at least in part is responsible for the improved performance, it is believe that hindered amine moieties, in particular 2,2,6,6-tetraalkyl piperidine moieties, preferably should be present in an amount of 0.003-0.5, such as 0.005-0.2, e.g. 0.008-0.2, in particular 0.01-0.1, mol/kg of the coat.

In another embodiment, the sterically hindered amine moieties, e.g. the 2,2,6,6-tetraalkyl piperidine moieties, are present in the coat in an amount of 0.015-100, such as 0.04-100, in particular 0.08-15, mol/kg of the poly(oxyalkylene) chains.

In one embodiment where the poly(oxyalkylene) chains are present in discrete molecules of the coat (i.e. non-immobilized), the coat typically comprises 0.3-12, such as 0.4-8, in particular 0.5-6, $g/m^2$ of said poly(oxyalkylene) chains and 0.1-20, such as 0.2-10, in particular 0.3-6, $g/m^2$ of said one or more sterically hindered amine(s), in particular 2,2,6,6-tetraalkyl piperidine derivatives.

In another embodiment where the poly(oxyalkylene) chains are present in discrete molecules of the coat (i.e. non-immobilized), the coat comprises 0.3-6 %, such as 0.4-4 %, in particular 0.5-3 %, by dry weight of said one or more poly(oxyalkylene) chains and 0.1-10 %, such as 0.2-5 %, in particular 0.3-3 %, by dry weight of said one or more sterically hindered amine(s), in particular 2,2,6,6-tetraalkyl piperidine derivatives.

In still another embodiment where the poly(oxyalkylene) chains are immobilized to the binder, the coat typically comprises 1-60, such as 2-40, in particular 3-30, $g/m^2$ of said poly(oxyalkylene) chains and 0.1-20, such as 0.2-10, in particular 0.3-6, $g/m^2$ of said one or more sterically hindered amine(s), in particular 2,2,6,6-tetraalkyl piperidine derivatives.

In another embodiment where the poly(oxyalkylene) chains are present in discrete molecules of the coat (i.e. non-immobilized), the coat comprises 1-30 %, such as 2-20 %, in particular 3-15 %, by dry weight of said one or more poly(oxyalkylene) chains and 0.1-10 %, such as 0.2-5 %, in particular 0.3-3 %, by dry weight of said one or more sterically hindered amine(s), in particular 2,2,6,6-tetraalkyl piperidine derivatives.

When the sterically hindered amine(s) are of the general formula II, the 2,2,6,6-tetraalkyl piperidine derivative(s) are typically selected from the following types: N-H piperidine derivatives, N-$C_{1-30}$-alkyl piperidine derivatives, N-$C_{1-30}$-alkenyl piperidine derivatives, N-aryl piperidine derivatives, N-hydroxyl piperidine derivatives, N-$C_{1-30}$-alkoxy piperidine derivatives, N-$C_{1-30}$-alkenyloxy piperidine derivatives, N-aryloxy piperidine derivatives, N-$C_{1-30}$-alkylcarbonyl piperidine derivatives, N-$C_{1-30}$-alkenylcarbonyl piperidine derivatives, and N-arylcarbonyl piperidine derivatives. The N-substituents may as such be substituted as defined for R3 above.

Preferred are the following types: N-$C_{1-30}$-alkyl piperidine derivatives, N-$C_{1-30}$-alkenyl piperidine derivatives, N-aryl piperidine derivatives, N-$C_{1-30}$-alkoxy piperidine derivatives, N-$C_{1-30}$-alkenyloxy piperidine derivatives, N-aryloxy piperidine derivatives, N-$C_{1-30}$-alkylcarbonyl piperidine derivatives, N-$C_{1-30}$-alkenylcarbonyl piperidine derivatives, and N-arylcarbonyl piperidine derivatives.

In some embodiments the following types are more preferred: N-$C_{1-30}$-alkyl piperidine derivatives, N-$C_{1-30}$-alkenyl piperidine derivatives, and N-aryl piperidine derivatives, in particular N-$C_{1-30}$-alkyl piperidine derivatives.

In other embodiments the following types are more preferred: N-$C_{1-30}$-alkoxy piperidine derivatives, N-$C_{1-30}$-alkenyloxy piperidine derivatives, and N-aryloxy piperidine derivatives, in particular N-$C_{1-30}$-alkoxy piperidine derivatives.

In still other embodiments the following types are more preferred: N-$C_{1-30}$-alkylcarbonyl piperidine derivatives, N-$C_{1-30}$-alkenylcarbonyl piperidine derivatives, and N-arylcarbonyl piperidine derivatives, in particular N-$C_{1-30}$-alkylcarbonyl piperidine derivatives.

The type of substituent (or absence thereof) on the N-atom of the 2,2,6,6-tetraalkyl piperidine moiety influences the pKa value of the piperidine derivative, which in turn may influence the efficiency of the stabilizing effect on the poly(oxyalkylene) chains.

For example, the pKa values (and pKb values) of the above typical classes of groups are as follows:

| Structure | pKa | pKb |
|---|---|---|
| >N-H | 8.0-9.7 | about 5.0 |
| >N-alkyl | 7.5-8.2 | 5.1-5.5 |
| >N-alkoxy | about 4.2 | about 9.6 |

(continued)

| Structure | pKa | pKb |
|---|---|---|
| >N-acyl | about 2.0 | - |

Without being bound to any particular theory, it is envisaged that the pKa values of the 2,2,6,6-tetraalkyl piperidine derivatives preferably should be below 8.5. Hence, it is preferred that the N is substituted (i.e. not N-H). More preferably, the pKa is below 8.0, such as below 7.0, e.g. below 6.0 or even below 5.0.

Furthermore, it is preferred that the 2,2,6,6-tetraalkyl piperidine derivatives (as well as generally the sterically hindered amines) in the overall structure of formula I or II do not include any primary amines or secondary amines. Furthermore, the structures of formula I or II should preferably not include any non-hindered tertiary amines.

It should be understood that the above embodiments may be viewed independently or in combination.

In some embodiments, such 2,2,6,6-tetraalkyl piperidine derivative(s) are in liquid form at 20 °C.

In some embodiments, the sterically hindered amine(s), in particular 2,2,6,6-tetraalkyl piperidine derivative(s), have a solubility in water at 20 °C of at the most 0.1 wt-%, preferably less than 0.01 wt-%, more preferably less than 0.001 wt-%, even more preferably less than 0.0001 wt-%.

In one embodiment, the constituent(s) having poly(oxyalkylene) chains are selected from poly(oxyalkylene)-modified polysiloxane oils and poly(oxyalkylene)-modified alcohols (see the sections "Poly(oxyalkylene)-modified polysiloxane oils" and "Poly(oxyalkylene)-modified alcohols" above).

In another embodiment, the constituent(s) having poly(oxyalkylene) chains are selected from poly(oxyalkylene) modifications of the binder matrix (see the section "Poly(oxyalkylene) modification of the binder matrix" above).

When any R group (in particular R1, R2, R3 and R4) are described as being "optionally substituted", this means that that may be substituted at any suitable position with halogen (-F, -Cl, -Br or -I), -$C_1$-$C_4$ alkyl, or -OH.

*Biocides*

Although not particularly required, it should be understood that the coat may comprise one or more biocides.

In the present context, the term "biocide" is intended to mean an active substance intended to destroy, deter, render harmless, prevent the action of, or otherwise exert a controlling effect on any harmful organism by chemical or biological means.

Illustrative examples of biocides are those selected from metallo-dithiocarbamates such as bis(dimethyldithiocarbamato)zinc, ethylene-bis(dithiocarbamato)zinc, ethylene-bis(dithiocarbamato)manganese, dimethyl dithiocarbamate zinc, and complexes between these; bis(1-hydroxy-2(1H)-pyridinethionato-O,S)-copper; copper acrylate; bis(1-hydroxy-2(1H)-pyridine-thionato-O,S)-zinc; phenyl(bispyridyl)-bismuth dichloride; metal biocides such as copper(I)oxide, cuprous oxide, metallic copper, copper metal alloys such as copper-nickel alloys like copper bronze; metal salts such as cuprous thiocyanate, basic copper carbonate, copper hydroxide, barium metaborate, copper chloride, silver chloride, silver nitrate and copper sulphide; heterocyclic nitrogen compounds such as 3a,4,7,7a-tetrahydro-2-((trichloromethyl)-thio)-1H-isoindole-1,3(2H)-dione, pyridine-triphenylborane, 1-(2,4,6-trichlorophenyl)-1H-pyrrole-2,5-dione, 2,3,5,6-tetrachloro-4-(methylsulfonyl)-pyridine, 2-methylthio-4-tert-butylamino-6-cyclopropylamine-s-triazin, and quinoline derivatives; heterocyclic sulfur compounds such as 2-(4-thiazolyl)benzimidazole, 4,5-dichloro-2-n-octyl-4-isothiazolin-3-one, 4,5-dichloro-2-octyl-3(2H)-isothiazoline (Sea-Nine®-211N), 1,2-benz-isothiazolin-3-one, and 2-(thiocyanatomethylthio)-benzothiazole; urea derivatives such as N-(1,3-bis(hydroxylmethyl)-2,5-dioxo-4-imidazolidinyl)-N,N'-bis(hydroxymethyl)urea, and N-(3,4-dichlorophenyl)-N,N-dimethylurea, N,N-dimethylchlorophenylurea; amides or imides of carboxylic acids; sulfonic acids and of sulfenic acids such as 2,4,6-trichlorophenyl maleimide, 1,1-dichloro-N-((dimethylamino)sulfonyl)-1-fluoro-N-(4-methylphenyl)-methanesulfenamide, 2,2-dibromo-3-nitrilo-propionamide, N-(fluorodichloromethylthio)-phthalimide, N,N-dimethyl-N'-phenyl-N'-(fluorodichloromethylthio)-sulfamide, and N-methylol formamide; salts or esters of carboxylic acids such as 2-((3-iodo-2-propynyl)oxy)-ethanol phenylcarbamate and N,N-didecyl-N-methyl-poly(oxyethyl)ammonium propionate; amines such as dehydroabiethyl-amines and cocodimethylamine; substituted methane such as di(2-hydroxy-ethoxy)methane, 5,5'-dichloro-2,2'-dihydroxydiphenylmethane, and methylene-bisthiocyanate; substituted benzene such as 2,4,5,6-tetrachloro-1,3-benzenedicarbonitrile, 1,1-dichloro-N-((dimethylamino)-sulfonyl)-1-fluoro-N-phenylmethanesulfenamide, and 1-((diiodomethyl)sulfonyl)-4-methyl-benzene; tetraalkyl phosphonium halogenides such as tri-n-butyltetradecyl phosphonium chloride; guanidine derivatives such as n-dodecylguanidine hydrochloride; disulfides such as bis-(dimethylthiocarbamoyl)-disulfide, tetramethylthiuram disulfide; imidazole containing compound, such as medetomidine; 2-(p-chlorophenyl)-3-cyano-4-bromo-5-trifluoromethyl pyrrole; bis(N-cyclohexyl-diazenium dioxy) copper, thiabendazole, N-trihalomethyl thiopthalimides, trihalomethyl thiosulphamides, capsaicin, 3-iodo-2-propynylbutyl carbamate, 1,4-dithiaanthraquinone-2,3-dicarbonitrile (dithianon), furanones such as 3-butyl-5-(dibromomethylidene)-2(5H)-furanone, macrocyclic lactones such as avermectins; and mixtures thereof.

Presently, it is preferred that the biocide (if present) does not comprise tin.

Currently preferred biocides are those selected from the group consisting of 2,4,5,6-tetra-chloroisophtalonitrile (Chlorothalonil), copper thiocyanate (cuprous sulfocyanate), N-dichloro-fluoromethylthio-N',N'-dimethyl-N-phenylsulfamide (Dichlofluanid), 3-(3,4-dichlorophenyl)-1,1-dimethylurea (Diuron), $N^2$-tert-butyl-$N^4$-cyclopropyl-6-methylthio-1,3,5-triazine-2,4-diamine (Cybutryne), 4-bromo-2-(4-chlorophenyl)-5-(trifluoromethyl)-1H-pyrrole-3-carbonitrile, (2-(p-chlorophenyl)-3-cyano-4-bromo-5-trifluoromethyl pyrrole; Tralopyril), *$N^2$-tert*-butyl-*$N^4$*-cyclopropyl-6-methylthio-1,3,5-triazine-2,4-diamine (Cybutryne), (RS)-4-[1-(2,3-dimethylphenyl)ethyl]-3H-imidazole (Medetomidine), 4,5-dichloro-2-n-octyl-4-isothiazolin-3-one (DCOIT, Sea-Nine® 211N), dichlor-N-((dimethylamino)sulfonyl)fluor-N-(p-tolyl)methansulfenamid (Tolylfluanid), 2-(thiocyanomethylthio)-1,3-benzothiazole ((2-benzothiazolylthio)methyl thiocyanate; TCMTB), triphenylborane pyridine (TPBP); bis(1-hydroxy-2(1H)-pyridinethionato-O,S)-(T-4) zinc (zinc pyridinethione; zinc pyrithione), bis(1-hydroxy-2(1H)-pyridinethionato-O,S)-T-4) copper (copper pyridinethione; copper pyrithione), zinc ethylene-1,2-bis-dithiocarbamate (zinc-ethylene-N-N'-dithiocarbamate; Zineb), copper(i) oxide, metallic copper, 3-(3,4-dichlorophenyl)-1,1-dimethylurea (Diuron) and diiodomethyl-p-tolylsulfone; Amical 48. Preferably at least one biocide is selected from the above list.

In a preferred embodiment (of the variants where one or more biocides are included), the biocides are preferably selected among biocides which are effective against soft fouling such as slime and algae. Examples of such biocides are $N^2$-tert-butyl-$N^4$-cyclopropyl-6-methylthio-1,3,5-triazine-2,4-diamine (Cybutryne), 4,5-dichloro-2-n-octyl-4-isothiazolin-3-one (DCOIT, Sea-Nine® 211N), bis(1-hydroxy-2(1H)-pyridinethionato-O,S)-(T-4) zinc (zinc pyridinethione; zinc pyrithione), bis(1-hydroxy-2(1H)-pyridinethionato-O,S)-T-4) copper (copper pyridinethione; copper pyrithione; Copper Omadine) and zinc ethylene-1,2-bis-dithiocarbamate (zinc-ethylene-N-N'-dithiocarbamate; Zineb), copper(I) oxide, metallic copper, copper thiocyanate, (cuprous sulfocyanate), bis(1-hydroxy-2(1H)-pyridinethionato-O,S)-T-4) copper (copper pyridinethione; copper pyrithione; Copper Omadine).

In some embodiments, at least one biocide is an organic biocide. In a further particularly preferred embodiment, the one or more biocides are organic biocides, such as a pyrithione complex, such as zinc pyrithione, or such as copper pyrithione. Organic biocides are those either fully or in part being of organic origin.

In one important embodiment, the one or more biocides comprises at least one of bis(1-hydroxy-2(1H)-pyridinethionato-O,S)-(T-4) zinc (zinc pyridinethione; Zinc Pyrithione), bis(1-hydroxy-2(1H)-pyridinethionato-O,S)-(T-4) copper (copper pyridinethione; Copper Pyrithione) and zinc ethylene-1,2-bis-dithiocarbamate (zinc-ethylene-N-N'-dithiocarbamate; Zineb).

As detailed in US 7,377,968, in those instances in which the biocide is depleted rapidly from the film due to e.g. a high water solubility or a high level of immiscibility with the matrix composition, it can be advantageous to add one or more of the biocide(s) in encapsulated form as a means of controlling the biocide dosage and extending the effective lifetime in the film. Encapsulated biocides can also be added if the free biocide alters the properties of the polysiloxane matrix in a way that is detrimental for its use as antifouling coatings (e.g. mechanical integrity, drying times, etc.).

In one embodiment, the biocide is encapsulated 4,5-dichloro-2-n-octyl-4-isothiazolin-3-one (Sea-Nine CR2).

The biocide preferably has a solubility in the range of 0-20 mg/L, such as 0.00001-20 mg/L, in water at 25 °C.

In one embodiment, the coat comprises 2-20 %, such as 4-16 %, in particular 5-13 %, by dry weight of said one or more biocides.

In another embodiment, the coat comprises 1-13 %, such as 2-10 %, in particular 3-8 %, by solids volume of said one or more biocides.

In still another embodiment, the coat comprises 2-35, such as 3-30, in particular 4-25, $g/m^2$ of said one or more biocides.

It should be understood that the above embodiments may be applied independently or in combination.

In some embodiments, a biocide is not included.

*Specific embodiments of the invention*

In one embodiment the fouling-release composition comprises:

40-98 %, such as 60-95 %, by dry weight of a polysiloxane-based binder matrix wherein more than 65 % by weight of the binder matrix is represented by polysiloxane parts,
0.1-20 %, such as 1-10 %, by dry weight of one or more additives,
0-25 %, such as 0.1-15 %, by dry weight of one or more pigments and fillers,
0.5-10 %, such as 0.7-8 %, in particular 1-6 %, by dry weight of one or more poly(oxyalkylene) chains, and
0.05-10 %, such as 0.1-7 %, in particular 0.15-5 %, by dry weight of one or more piperidine derivatives.

In another embodiment, the fouling-release composition comprises:

50-90 % by dry weight of a polysiloxane-based binder matrix wherein more than 60 % by weight of the binder matrix is represented by polysiloxane parts, in particular 60-99.5%, or even 70-99%, or 90-97% and the remainder of the binder matrix is preferably made of hydrophilic oligomer/polymer moieties and any crosslinkers. The hydrophilic oligomer/polymer moieties preferably makes up to 1-30% by weight, such as 2-20% by weight, e.g. 1-10% by weight, of the binder matrix,
0.1-20 %, such as 1-10 %, by dry weight of one or more additives,
0-25 %, such as 0.1-15 %, by dry weight of one or more pigments and fillers, and
0.05-10 %, such as 0.1-7 %, in particular 0.15-5 %, by dry weight of one or more piperidine derivatives.

In another embodiment, the fouling-release composition comprises:

50-90 % by dry weight of a polysiloxane-based binder matrix wherein more than 60 % by weight of the binder matrix is represented by polysiloxane parts, in particular 60-99.5%, or even 70-99%, or 90-97% and the remainder of the binder matrix is preferably made of hydrophilic oligomer/polymer moieties and any crosslinkers. The hydrophilic oligomer/polymer moieties preferably makes up to 1-30% by weight, such as 2-20% by weight, e.g. 1-10% by weight, of the binder matrix,
1-10 % by dry weight of one or more poly(oxyalkylene)-modified polysiloxane oils,
0.1-20 %, such as 1-10 %, by dry weight of one or more additives,
0-25 %, such as 0.1-15 %, by dry weight of one or more pigments and fillers, and 0.05-10 %, such as 0.1-7 %, in particular 0.15-5 %, by dry weight of one or more piperidine derivatives.

In another embodiment the fouling-release composition comprises:

40-98 %, such as 60-95 %, by solids volume of a polysiloxane-based binder matrix wherein more than 65 % by weight of the binder matrix is represented by polysiloxane parts,
0.1-20 %, such as 0.1-15 %, by solids volume of one or more additives,
1-10 %, such as 2-8 %, by solids volume of one or more pigments and fillers,
1-30 %, such as 2-20 %, in particular 3-15 %, by solids volume of one or more poly(oxyalkylene) chains; and
0.05-10 %, such as 0.1-7 %, in particular 0.15-5 %, by solids volume of said one or more piperidine derivatives.

In a more particular embodiment, the before-mentioned fouling-release coat (and the corresponding coating composition) comprises as the constituent comprising the poly(oxyalkylene chains) 1-15 %, such as 1-12 %, in particular 2-9 %, by solids volume of one or more poly(oxyalkylene)-modified polysiloxane oil(s), in particular with a molecular weight of 600-30,000, such as 800-20,000 or 1,000-10,000, more specifically 1,400-10,000 or 1,400-7,000 g/mol, and a HLB of 4-16, such as 5-15 or 6-14, in particular 7-13.

In a more particular embodiment, the before-mentioned fouling-release coat (and the corresponding coating composition) comprises as the constituent comprising the poly(oxyalkylene chains) 1-15 %, such as 1-12 %, in particular 2-9 %, by solids volume of one or more poly(oxyalkylene)-modified alcohols as defined hereinabove), in particular with a molecular weight of 500-5,000, such as 600-4,000 or 600-3,000 g/mol, and a HLB of 6-16, such as 7-16 or 8-16, in particular 9-15.

In variants of the embodiments above, the sterically hindered amine(s) are selected from 2,2,6,6-tetraalkyl piperidine derivatives (general formula II).

In one embodiment, the weight ratio between the total amount of the one or more poly(oxyalkylene) chains and the one or more sterically hindered amines, such as 2,2,6,6-tetraalkyl piperidine derivatives, is in the range of 1:0.01 to 1:3, such as 1:0.02 to 1:2, in particular 1:0.04 to 1:1.5.

In variants of the embodiments above, the sterically hindered amine(s), e.g. piperidine derivative(s), are present in a total amount of 0.05-10 %, such as 0.08-8 %, or such as 0.1-7 %, such as 0.12-5 %, in particular 0.15-3 %, by dry weight of said coat (or coating composition).

In one embodiment the tie-coat composition comprises:

3-90%, preferably 10-80%, more preferably 20-60% of said one or more cross-linkable polysiloxanes, by wet weight of the total tie-coat composition,
0.1-20 %, such as 1-10 %, by dry weight of one or more additives,
0-25 %, such as 0.1-15 %, by dry weight of one or more pigments and fillers,
0.5-10 %, such as 0.7-8 %, in particular 1-6 %, by dry weight of one or more poly(oxyalkylene) chains, and
0.05-10 %, such as 0.1-7 %, in particular 0.15-5 %, by dry weight of one or more piperidine derivatives.

In another embodiment, the tie-coat composition comprises:

3-90%, preferably 10-80%, more preferably 20-60% of said one or more cross-linkable polysiloxanes, by wet weight of the total tie-coat composition. The hydrophilic oligomer/polymer moieties preferably makes up to 1-30% by weight, such as 2-20% by weight, e.g. 1-10% by weight, of the binder matrix,
0.1-20 %, such as 1-10 %, by dry weight of one or more additives,
0-25 %, such as 0.1-15 %, by dry weight of one or more pigments and fillers, and 0.05-10 %, such as 0.1-7 %, in particular 0.15-5 %, by dry weight of one or more piperidine derivatives.

In another embodiment, the tie-coat composition comprises:

3-90%, preferably 10-80%, more preferably 20-60% of said one or more cross-linkable polysiloxanes, by wet weight of the total tie-coat composition. The hydrophilic oligomer/polymer moieties preferably makes up to 1-30% by weight, such as 2-20% by weight, e.g. 1-10% by weight, of the binder matrix,
1-10 % by dry weight of one or more poly(oxyalkylene)-modified polysiloxane oils,
0.1-20 %, such as 1-10 %, by dry weight of one or more additives,
0-25 %, such as 0.1-15 %, by dry weight of one or more pigments and fillers, and 0.05-10 %, such as 0.1-7 %, in particular 0.15-5 %, by dry weight of one or more piperidine derivatives.

In another embodiment the tie-coat composition comprises:

3-90%, preferably 10-80%, more preferably 20-60% of said one or more cross-linkable polysiloxanes, by wet weight of the total tie-coat composition, wherein more than 65 % by weight of the binder matrix is represented by polysiloxane parts,
1-30 %, such as 2-20 %, in particular 3-15 %, by solids volume of one or more poly(oxyalkylene) chains; and
0.05-10 %, such as 0.1-7 %, in particular 0.15-5 %, by solids volume of said one or more piperidine derivatives.

In one embodiment the tie-coat composition comprises:

3-15% of said one or more cross-linkable polysiloxanes, by wet weight of the total tie-coat composition,
0.1-20 %, such as 1-10 %, by dry weight of one or more additives,
0-25 %, such as 0.1-15 %, by dry weight of one or more pigments and fillers,
0.5-10 %, such as 0.7-8 %, in particular 1-6 %, by dry weight of one or more poly(oxyalkylene) chains, and
0.05-10 %, such as 0.1-7 %, in particular 0.15-5 %, by dry weight of one or more piperidine derivatives.

In another embodiment, the tie-coat composition comprises:

3-15% of said one or more cross-linkable polysiloxanes, by wet weight of the total tie-coat composition. The hydrophilic oligomer/polymer moieties preferably makes up to 1-30% by weight, such as 2-20% by weight, e.g. 1-10% by weight, of the binder matrix,
0.1-20 %, such as 1-10 %, by dry weight of one or more additives,
0-25 %, such as 0.1-15 %, by dry weight of one or more pigments and fillers, and
0.05-10 %, such as 0.1-7 %, in particular 0.15-5 %, by dry weight of one or more piperidine derivatives.

In another embodiment, the tie-coat composition comprises:

3-15%of said one or more cross-linkable polysiloxanes, by wet weight of the total tie-coat composition. The hydrophilic oligomer/polymer moieties preferably makes up to 1-30% by weight, such as 2-20% by weight, e.g. 1-10% by weight, of the binder matrix,
1-10 % by dry weight of one or more poly(oxyalkylene)-modified polysiloxane oils,
0.1-20 %, such as 1-10 %, by dry weight of one or more additives,
0-25 %, such as 0.1-15 %, by dry weight of one or more pigments and fillers, and 0.05-10 %, such as 0.1-7 %, in particular 0.15-5 %, by dry weight of one or more piperidine derivatives.

In another embodiment the tie-coat composition comprises:

3-15% of said one or more cross-linkable polysiloxanes, by wet weight of the total tie-coat composition, wherein more than 65 % by weight of the binder matrix is represented by polysiloxane parts,
1-30 %, such as 2-20 %, in particular 3-15 %, by solids volume of one or more poly(oxyalkylene) chains; and
0.05-10 %, such as 0.1-7 %, in particular 0.15-5 %, by solids volume of said one or more piperidine derivatives.

In one embodiment the tie-coat composition comprises:

>40% of said one or more cross-linkable polysiloxanes, by wet weight of the total tie-coat composition,
0.1-20 %, such as 1-10 %, by dry weight of one or more additives,
0-25 %, such as 0.1-15 %, by dry weight of one or more pigments and fillers,
0.5-10 %, such as 0.7-8 %, in particular 1-6 %, by dry weight of one or more poly(oxyalkylene) chains, and
0.05-10 %, such as 0.1-7 %, in particular 0.15-5 %, by dry weight of one or more piperidine derivatives.

In another embodiment, the tie-coat composition comprises:

>40% of said one or more cross-linkable polysiloxanes, by wet weight of the total tie-coat composition. The hydrophilic oligomer/polymer moieties preferably makes up to 1-30% by weight, such as 2-20% by weight, e.g. 1-10% by weight, of the binder matrix,
0.1-20 %, such as 1-10 %, by dry weight of one or more additives,
0-25 %, such as 0.1-15 %, by dry weight of one or more pigments and fillers, and 0.05-10 %, such as 0.1-7 %, in particular 0.15-5 %, by dry weight of one or more piperidine derivatives.

In another embodiment, the tie-coat composition comprises:

>40% of said one or more cross-linkable polysiloxanes, by wet weight of the total tie-coat composition. The hydrophilic oligomer/polymer moieties preferably makes up to 1-30% by weight, such as 2-20% by weight, e.g. 1-10% by weight, of the binder matrix,
1-10 % by dry weight of one or more poly(oxyalkylene)-modified polysiloxane oils,
0.1-20 %, such as 1-10 %, by dry weight of one or more additives,
0-25 %, such as 0.1-15 %, by dry weight of one or more pigments and fillers, and 0.05-10 %, such as 0.1-7 %, in particular 0.15-5 %, by dry weight of one or more piperidine derivatives.

In another embodiment the tie-coat composition comprises:

>40% of said one or more cross-linkable polysiloxanes, by wet weight of the total tie-coat composition, wherein more than 65 % by weight of the binder matrix is represented by polysiloxane parts,
1-30 %, such as 2-20 %, in particular 3-15 %, by solids volume of one or more poly(oxyalkylene) chains; and
0.05-10 %, such as 0.1-7 %, in particular 0.15-5 %, by solids volume of said one or more piperidine derivatives.

In a more particular embodiment, the tie-coat composition comprises as the constituent comprising the poly(oxyalkylene chains) 1-15 %, such as 1-12 %, in particular 2-9 %, by solids volume of one or more poly(oxyalkylene)-modified polysiloxane oil(s), in particular with a molecular weight of 600-30,000, such as 800-20,000 or 1,000-10,000, more specifically 1,400-10,000 or 1,400-7,000 g/mol, and a HLB of 4-16, such as 5-15 or 6-14, in particular 7-13.
In a more particular embodiment, the tie-coat composition comprises as the constituent comprising the poly(oxyalkylene chains) 1-15 %, such as 1-12 %, in particular 2-9 %, by solids volume of one or more poly(oxyalkylene)-modified alcohols as defined hereinabove), in particular with a molecular weight of 500-5,000, such as 600-4,000 or 600-3,000 g/mol, and a HLB of 6-16, such as 7-16 or 8-16, in particular 9-15.
In variants of the embodiments above, the sterically hindered amine(s) are selected from 2,2,6,6-tetraalkyl piperidine derivatives (general formula II).
In one embodiment, the weight ratio between the total amount of the one or more poly(oxyalkylene) chains and the one or more sterically hindered amines, such as 2,2,6,6-tetraalkyl piperidine derivatives, is in the range of 1:0.01 to 1:3, such as 1:0.02 to 1:2, in particular 1:0.04 to 1:1.5.
In variants of the embodiments above, the sterically hindered amine(s), e.g. piperidine derivative(s), are present in a total amount of 0.05-10 %, such as 0.08-8 %, or such as 0.1-7 %, such as 0.12-5 %, in particular 0.15-3 %, by dry weight of said coat (or coating composition).

*Fouling-release coating system*

In one aspect a fouling-release coating system obtained by the method of the invention is provided. All details of all components and layers described herein for the method are also relevant for the fouling-release system.
In a second aspect, a fouling-release coating system is provided which comprises;

a. a substrate,

b. optionally one or more primer layers,

c. at least one silicone-containing tie-coat layer

d. a fouling-release layer comprising a condensation-cured polysiloxane-based binder matrix constituting at least 40 % by dry weight of said coat, wherein more than 65 % by weight of said binder matrix is represented by polysiloxane parts, said coat comprising constituents having poly(oxyalkylene) chains,

wherein said tie-coat layer and/or said fouling-release layer further comprises one or more sterically hindered amines, in particular 2,2,6,6-tetraalkyl piperidine derivatives.

In one aspect of such a coating system, said tie-coat comprises one or more poly(oxyalkylene)-modified polysiloxane oils. In another aspect, said tie-coat comprises one or more sterically hindered amines as defined herein. In another aspect of such a coating system, said tie-coat comprises both one or more poly(oxyalkylene)-modified polysiloxane oils and one or more sterically hindered amines as defined herein.

Inclusion of sterically hindered amine(s) (like 2,2,6,6-tetraalkyl piperidine derivative(s)) in the tie-coat and poly(oxyalkylene) chains in the fouling-release coat(s) is believed to improve the longevity of the fouling release performance of the fouling-release coating system compared to a system where the first coat does not contain sterically hindered amines. Without being bound to any particular theory, it is believed that the sterically hindered amine(s), like 2,2,6,6-tetralkyl piperidine derivative(s), will be able to migrate from the underlying coating into the silicone fouling release coating. If the underlying tie-coat is of a soft kind, this would probably happen to a greater extent compared to a hard coating underneath.

*Application of the coating composition*

The coating composition of the invention is typically applied to at least a part of the surface of a substrate.

The term "applying" is used in its normal meaning within the paint industry. Thus, "applying" is conducted by means of any conventional means, e.g. by brush, by roller, by spraying, by dipping, etc. The commercially most interesting way of "applying" the coating composition is by spraying. Hence, the coating composition is preferably sprayable. Spraying is effected by means of conventional spraying equipment known to the person skilled in the art. The coating is typically applied in a dry film thickness of 50-600 $\mu$m, such as 50-500 $\mu$m, e.g. 75-400 $\mu$m, or 100-300 $\mu$m.

Moreover, the coating composition is preferably such with respect to sag resistance cf. ASTM D 4400-99 (i.e. relating to its ability to be applied in a suitable film thickness to a vertical surface without sagging) that it exhibits sag resistance for a wet film thickness up to at least 70 $\mu$m, such as up to at least 200 $\mu$m, e.g. up to at least 300 $\mu$m, preferably up to at least 400 $\mu$m, and in particular up to at least 600 $\mu$m.

The term "at least a part of the surface of a substrate" refers to the fact that the coating composition may be applied to any fraction of the surface. For many applications, the coating composition is at least applied to the part of the substrate (e.g. a vessel) where the surface (e.g. the ship's hull) may come in contact with water, e.g. sea-water.

The term "substrate" is intended to mean a solid material onto which the coating composition is applied. The substrate typically comprises a metal such as steel, iron, aluminium, or glass-fibre reinforced polyester. In the most interesting embodiments, the substrate is a metal substrate, in particular a steel substrate. In an alternative embodiment, the substrate is a glass-fibre reinforced polyester substrate. In some embodiments, the substrate is at least a part of the outermost surface of a marine structure.

The term "surface" is used in its normal sense, and refers to the exterior boundary of an object. Particular examples of such surfaces are the surface of marine structures, such as vessels (including but not limited to boats, yachts, motorboats, motor launches, ocean liners, tugboats, tankers, container ships and other cargo ships, submarines, and naval vessels of all types), pipes, shore and off-shore machinery, constructions and objects of all types such as piers, pilings, bridge substructures, floatation devices, water-power installations and structures, underwater oil well structures, nets and other aquatic culture installations, and buoys, etc.

The surface of the substrate may either be the "native" surface (e.g. the steel surface). However, the substrate is typically coated, e.g. with an anticorrosive coating and/or a tie coat, so that the surface of the substrate is constituted by such a coating. When present, the (anticorrosive and/or tie) coating is typically applied in a total dry film thickness of 50-600 $\mu$m, such as 150-450 $\mu$m, e.g. 200-400 $\mu$m, or 20-200 $\mu$m. Alternatively, the substrate may carry a paint coat, e.g. a worn-out fouling-release paint coat, or similar.

In one important embodiment, the substrate is a metal substrate (e.g. a steel substrate) coated with an anticorrosive coating such as an anticorrosive epoxy-based coating, e.g. cured epoxy-based coating, or a shop-primer, e.g. a zinc-rich shop-primer. In another relevant embodiment, the substrate is a glass-fiber reinforced polyester substrate coated with an epoxy primer coating.

The coat of the main aspect of the invention is typically applied as the outermost coat (a.k.a. a top-coat), i.e. the coat being exposed to the environment, e.g. an aquatic environment. However, it should be understood that the coat of the main aspect of the invention alternatively may be applied as a layered system where the coat described in the

main aspect of this invention will be coated with one or more layer(s) of one or more other coating compositions in order to obtain and improve control of the leaching rate of the leachable components in the coat.

Prior to the application of a coating composition to a marine structure, the marine structure may first be coated with a primer-system which may comprise several layers and may be any of the conventional primer systems used in connection with application of coating compositions to marine structures. Thus, the primer system may include an anti-corrosive primer optionally followed by a layer of an adhesion-promoting primer.

This being said, the invention also relates to a method of establishing a fouling-release coating system on a surface of a substrate, comprising the sequential steps of:

a) applying one or more layers of a primer composition onto the surface of said substrate, thereby forming a primed substrate,

b) applying one or more layers of a tie-coat composition onto the surface of said primed substrate, and allowing said layer(s) to cure, thereby forming a cured tie-coat, and

c) applying one or more layers of a fouling-release coating composition as defined herein onto the surface of said cured tie-coat, and allowing said layer(s) to cure, thereby forming a cured fouling-release coat as defined hereinabove (main aspect).

In some currently less preferred variants of the above-mentioned method, the cured fouling-release coat may be further coated with a top-coat, e.g. a PDMS-based top-coat.

This being said, the invention also relates to a method of establishing a fouling-release coating system on a surface of a substrate (according to the alternative aspect), comprising the sequential steps of:

a) applying one or more layers of a fouling-release coating composition as defined herein onto the surface of said substrate, e.g. either a native substrate or a substrate already carrying one or more coatings, as the case may be, and allowing said layer(s) to cure, thereby forming a cured first coat as defined hereinabove for the alternative aspect, and

b) applying one or more layers of a fouling-release coating composition as defined herein onto the surface of said cured first coat, and allowing said layer(s) to cure, thereby forming a cured second coat as defined hereinabove for the alternative aspect.

The invention also relates to a method of establishing a fouling-release coating system on a surface of a substrate (according to the alternative aspect), comprising the sequential steps of:

a) applying one or more layers of a primer composition onto the surface of said substrate, and allowing said layer(s) to cure, thereby forming a primed substrate,

b) optionally applying one or more layers of a tie-coat composition onto the surface of said primed substrate, and allowing said layer(s) to cure, thereby forming a cured tie-coat;

c) applying one or more layers of a fouling-release coating composition as defined herein onto the surface of said primed substrate or the surface of said tie-coat, as the case may be, and allowing said layer(s) to cure, thereby forming a cured first coat as defined hereinabove for the alternative aspect, and

d) applying one or more layers of a fouling-release coating composition as defined herein onto the surface of said cured first coat, and allowing said layer(s) to cure, thereby forming a cured second coat as defined hereinabove for the alternative aspect.

The invention further relates to a method of establishing a fouling-release coating system on a surface of an aged antifouling coating system, comprising the sequential steps of:

a) applying one or more layers of a sealer/link-coat composition onto the surface of said substrate, allowing said layer(s) to cure, thereby forming a sealed substrate,

b) optionally applying one or more layers of a tie-coat composition onto the surface of said sealed substrate, and allowing said layer(s) to cure, thereby forming a cured tie-coat;

c) applying one or more layers of a fouling-release coating composition as defined herein onto the surface of said primed substrate or the surface of said tie-coat, as the case may be, and allowing said layer(s) to cure, thereby forming a cured first coat as defined hereinabove for the alternative aspect, and

d) applying one or more layers of a fouling-release coating composition as defined herein onto the surface of said cured first coat, and allowing said layer(s) to cure, thereby forming a cured second coat as defined hereinabove for the alternative aspect.

The invention further relates to a method of establishing a fouling-release coating system on a surface of an aged fouling-release coating system, comprising the sequential steps of:

a) optionally applying one or more layers of a tie-coat composition onto the surface of said aged fouling-release coating system, and allowing said layer(s) to cure, thereby forming a cured tie-coat;

b) applying one or more layers of a fouling-release coating composition as defined herein onto the surface of said primed substrate or the surface of said tie-coat, as the case may be, and allowing said layer(s) to cure, thereby forming a cured first coat as defined hereinabove for the alternative aspect, and

c) applying one or more layers of a fouling-release coating composition as defined herein onto the surface of said cured first coat, and allowing said layer(s) to cure, thereby forming a cured second coat as defined hereinabove for the alternative aspect.

*A Marine Structure*

The present invention also provides a marine structure comprising on at least a part of the surface thereof an outermost fouling-release coating system (or (single) coat) as defined hereinabove. In particular, at least as part of the outer surface carrying the outermost coating is a submerged part of said structure.

The coating composition, the method of establishing the coating on the substrate surface, and the characteristics of the coating follow the directions given hereinabove.

In one embodiment, the fouling-release coating system of the marine structure may consist of an anticorrosive layer, a tie-coat and the fouling-release coating system as described herein.

In an alternative embodiment, the fouling-release coating composition is applied on top of a used fouling-release coating system, e.g. on top of a used polysiloxane-based fouling-release coat.

In one particular embodiment of the above marine structure, the anticorrosive layer has a total dry film thickness of 100-600 μm, such as 150-450 μm, e.g. 200-400 μm; the tie-coat has a total dry film thickness of 50-500 μm, such as 50-400 μm, e.g. 75-350 μm or 75-300 μm or 75-250 μm; and the fouling-release coating has a total dry film thickness of 20-500 μm, such as 20-400 μm, e.g. 50-300 μm.

A further embodiment of the marine structure is that where at least a part of the outermost surface of said structure is coated with a fouling-release coating system comprising

a total dry film thickness of 150-400 μm of an anticorrosive layer of an epoxy-based coating established by application of 1-4, such as 2-4, layers;
a total dry film thickness of 20-400 μm of the tie-coat established by application of 1-2 layers; and
a total dry film thickness of 20-400 μm of the fouling-release coating (according to the main aspect) established by application of 1-2 layers.

A further embodiment of the marine structure is that where at least a part of the outermost surface of said structure is coated with a fouling-release coating system (alternative aspect) comprising

a total dry film thickness of 150-400 μm of an anticorrosive layer of an epoxy-based coating established by application of 1-4, such as 2-4, layers;
a total dry film thickness of 20-400 μm of the tie-coat established by application of 1-2 layers;
a total dry film thickness of 20-400 μm of the first coat (cf. the alternative aspect) of the fouling-release coating established by application of 1-2 layers;
a total dry film thickness of 20-400 μm of the second coat (cf. the alternative aspect) of the fouling-release coating established by application of 1-2 layers.

In another embodiment of the above marine structures, the fouling-release coating is applied directly on the

anticorrosive layer without the use of tie-coat.

*General Remarks*

Although the present description and claims occasionally refer to a polysiloxane, etc., it should be understood that the coating compositions defined herein may comprise one, two or more types of the individual constituents. In such embodiments, the total amount of the respective constituent should correspond to the amount defined above for the individual constituent.

The "(s)" in the expressions: compound(s), polysiloxane(s), agent(s), etc. indicates that one, two or more types of the individual constituents may be present.

On the other hand, when the expression "one" is used, only one (1) of the respective constituent is present.

It should be understood that the expression "% dry weight" means the percentage of the respective component based on the dry weight of the coat or of the coating composition, as the case may be. For most practical purposes (hence, unless otherwise stated), the "% dry weight" when referring the cured coat is identical to the "% dry weight" of the coating composition.

EXAMPLES

*Viscosity*

In the context of the present application with claims, viscosity is measured at 25 °C in accordance with ISO 2555:1989.

*Determination of pKa value*

The pKa value for the sterically hindered amines, such as 2,2,6,6-tetraalkyl piperidine derivatives, is measured by non-aqueous titration. Organic reference materials with known pKa values in water, are titrated in non-aqueous media (1:1 acetonitril:chloroform and 0.1 N perchloric acid/dioxane titrant system) to generate a non-aqueous calibration plot of half-neutralization potential versus pKa. The "unknown" hindered amines are then titrated to determine the half-neutralization potential, and extrapolated to obtain the corresponding pKa from this calibration plot.

*Determination of HLB value*

The HLB (hydrophilic-lipophilic balance) value for a poly(oxyalkylene)-modified molecule is determined according to Griffin's method:

$$\text{HLB value} = 20 * M_h/M$$

wherein $M_h$ is the weight of the hydrophilic (e.g. poly(oxyalkylene)) group(s) in the molecule, and wherein M is the weight of the whole molecule.

*Preparation method for the model paints*

Part (i): binder, solvents, pigments, biocides (where applicable), sterically hindered amines (e.g. 2,2,6,6-tetraalkyl piperidine derivatives), any poly(oxyalkylene)-modified silicone oils or alcohols and additives are mixed on a Diaf dissolver equipped with an impeller disc (e.g. 70 mm diameter impeller disc in a 1 L can for 15 minutes at 2000 rpm).

Part (ii): curing agent, solvents, catalyst, and 2,4-pentanedione are mixed on a Diaf dissolver equipped with an impeller disc (e.g. 70 mm diameter impeller disc in a 1 L can for 2 minutes at 500 rpm).

Before the application, part (i) and part (ii) are mixed together according to the compositions provided in the examples, where after the mix is then stirred to obtain homogeneity.

*Antifouling property test*

Raft Test

*Preparation of panels*

An acrylic panel (150x200 mm), sandblasted on one side to facilitate adhesion of the coating, is coated with 100 μm (DFT) of a commercial epoxy (HEMPEL Light Primer 45551) applied by air spraying. After 6 - 24 hrs of drying at room temperature a tie coat is applied by doctor blade of 300 μm clearance. After 16-30 hrs of drying the top coat paint compositions are applied by doctor blade of 400 μm clearance. The panels are dried for at least 72 hrs before immersion on the raft.

*Testing*

Panels are tested at two different locations; Spain and Singapore.

Test site in Spain

Located in Vilanova in north-eastern Spain. At this test site the panels are immersed into sea water with salinity in the range of 37-38 parts per thousand at an average temperature of 17-18 °C.

Test site in Singapore

At this test site the panels are immersed into sea water with salinity in the range of 29-31 parts per thousand at a temperature in the range of 29-31 °C.

Panels are inspected ever 4-12 weeks and evaluated according to the following scale:

| Level | Description |
|---|---|
| Excellent | Only slime |
| Good | Algae + Animals < 10 % |
| Fair | 10 % < Algae + Animals < 25 % |
| Poor | Algae + Animals > 25 % |

*Examples*

The following model paints can be prepared for testing for antifouling performance. All entries in model paints table are in weight unless otherwise stated.

*Materials*

| Coating constituent | Description | Trade name | Supplier |
|---|---|---|---|
| | | | |
| Binder 1 | Silanol-terminated polysiloxane, 4000 cst | OHX-4010 Polymer | Xiameter |
| Binder 2 | Silanol-terminated polysiloxane, 2000 cst | Polymer C2T | Wacker Chemie |

(continued)

| Coating constituent | Description | Trade name | Supplier |
|---|---|---|---|
| Pigment | Red iron oxide | Bayferrox 130M | Lanxess |
| Silica 1 | Fumed silica, hydrophobic | Aerosil R972 | Evonik |
| Silica 2 | Fumed silica, hydrophobic | HDK H2000 | Wacker Chemie |
| Wax | Polyamide wax | Crayvallac super | Arkema |
| Dispersing agent | Organically modified polysiloxane | | |
| Catalyst | Dibutyltin dilaurate | TIB KAT 218 | TIB Chemicals |
| Siloxane oil | Methyl phenyl polysiloxane | Dow Corning 550 Fluid | Dow Corning |
| Cross-linker 1 | Prehydrolysed silane | | |
| Cross-linker 2 | Tetraethyl orthosilicate | Silikat TES 40 WN | Wacker Chemie |
| Solvent 1 | Xylene | | |
| Solvent 2 | Acetylacetone | | |
| Solvent 3 | Butyl acetate | | |
| Oil 1 | Poly(oxyalkylene)-modified PDMS oil (Mw 4000 and HLB 10.7) | | |
| Oil 2 | Poly(oxyalkylene)-modified PDMS oil | Tego glide 435 | Evonik |
| Oil 3 | Poly(oxyalkylene)-modified PDMS oil (Mw 2200 and HLB 6.4) | | |
| Lanolin-PEG | Poly(oxyalkylene)-modified lanolin oil | Aqualose L30 | Croda |
| PEG-silane | Silane modified poly(oxyalkylene) | Dynasylan 4148 | Evonik |
| Hindered amine 1 | N-O-R Hindered amine | Tinuvin 123 | BASF |
| Hindered amine 2 | N-O-R Hindered amine | Tinuvin 249 | BASF |
| Hindered amine 3 | N-CH3 Hindered amine | Sabostab UV 65 | Sabo |
| Hindered amine 4 | N-H Hindered amine | ADK STAB LA-68 | Adeka |
| Hindered amine 5 | N-CH3 Hindered amine | ADK STAB LA-52SC | Adeka |
| Hindered amine 6 | N-H Hindered amine | ADK STAB LA-57 | Adeka |

(continued)

| Coating constituent | Description | Trade name | Supplier |
|---|---|---|---|
| Hindered amine 7 | Silane modified N-$CH_3$ hindered amine.<br><br>Synthesis by reacting 5g 1,2,2,6,6-Pentamethyl-4-piperidinol (Sigma Aldrich) with 5g Isocyanatopropyltrimethoxysilane (Momentive) in 26g of acetone at 45°C for 24 hours, resulting in 25 w/w% product solution | | Momentive / Sigma Aldrich |

| Example No. | Ref1 | Ex 1 | Ex 2 | Ex 3 | Ex 4 |
|---|---|---|---|---|---|
| | | | | | |
| Binder 1 | 58.3 | 58.3 | 58.3 | 58.3 | 58.3 |
| Pigment | 4 | 4 | 4 | 4 | 4 |
| Silica 1 | 1 | 1 | 1 | 1 | 1 |
| Wax | 0.6 | 0.6 | 0.6 | 0.6 | 0.6 |
| Solvent 1 | 21.9 | 21.9 | 21.9 | 21.9 | 21.9 |
| Cross-linker 1 | 6 | 6 | 6 | 6 | 6 |
| Catalyst | 0.18 | 0.18 | 0.18 | 0.18 | 0.18 |
| Solvent 2 | 1 | 1 | 1 | 1 | 1 |
| Siloxane oil | 2 | 2 | 2 | 2 | 2 |
| Oil 1 | 2 | 2 | 2 | 2 | 2 |
| Hindered amine 1 | | 0.21 | 0.42 | 0.69 | 1.4 |
| | | | | | |
| Singapore, 56 weeks | Poor | Good | Good | Good | Good |

Examples 1-4 show an improved effect of the antifouling properties of a paint comprising a poly(oxyalkylene)-modified siloxane oil and a N-O-R hindered amine (at different levels) compared to a reference only including the poly(oxyalkylene)-modified siloxane oil.

| Example No. | Ref1 | Ex 5 | Ex 6 | Ex 7 | Ex 8 |
|---|---|---|---|---|---|
| | | | | | |
| Binder 1 | 58.3 | 58.3 | 58.3 | 58.3 | 58.3 |
| Pigment | 4 | 4 | 4 | 4 | 4 |
| Silica 1 | 1 | 1 | 1 | 1 | 1 |
| Wax | 0.6 | 0.6 | 0.6 | 0.6 | 0.6 |
| Solvent 1 | 21.9 | 21.9 | 21.9 | 21.9 | 21.9 |
| Cross-linker 1 | 6 | 6 | 6 | 6 | 6 |
| Catalyst | 0.18 | 0.18 | 0.18 | 0.18 | 0.18 |
| Solvent 2 | 1 | 1 | 1 | 1 | 1 |
| Siloxane oil | 2 | 2 | 2 | 2 | 2 |
| Oil 1 | 2 | 2 | 2 | 2 | 2 |

(continued)

| Example No. | Ref1 | Ex 5 | Ex 6 | Ex 7 | Ex 8 |
|---|---|---|---|---|---|
| Hindered amine 2 | | 0.21 | 0.42 | 0.69 | 1.4 |
| | | | | | |
| Singapore, 56 weeks | Poor | Good | Good | Good | Good |

Examples 5-8 show an improved effect of the antifouling properties of a paint comprising a poly(oxyalkylene)-modified siloxane oil and a N-O-R hindered amine (at different levels) compared to a reference only including the poly(oxyalkylene)-modified siloxane oil.

| Example No. | Ref1 | Ex 9 | Ex 10 | Ex 11 | Ex 12 |
|---|---|---|---|---|---|
| | | | | | |
| Binder 1 | 58.3 | 58.3 | 58.3 | 58.3 | 58.3 |
| Pigment | 4 | 4 | 4 | 4 | 4 |
| Silica 1 | 1 | 1 | 1 | 1 | 1 |
| Wax | 0.6 | 0.6 | 0.6 | 0.6 | 0.6 |
| Solvent 1 | 21.9 | 21.9 | 21.9 | 21.9 | 21.9 |
| Cross-linker 1 | 6 | 6 | 6 | 6 | 6 |
| Catalyst | 0.18 | 0.18 | 0.18 | 0.18 | 0.18 |
| Solvent 2 | 1 | 1 | 1 | 1 | 1 |
| Siloxane oil | 2 | 2 | 2 | 2 | 2 |
| Oil 1 | 2 | 2 | 2 | 2 | 2 |
| Hindered amine 3 | | 0.21 | 0.42 | 0.69 | 1.4 |
| | | | | | |
| Singapore, 56 weeks | Poor | Good | Good | Good | Good |

Examples 9-12 show an improved effect of the antifouling properties of a paint comprising a poly(oxyalkylene)-modified siloxane oil and a N-$CH_3$ hindered amine (at different levels) compared to a reference only including the poly(oxyalkylene)-modified siloxane oil.

| Example No. | Ref2 | Ex 13 | Ex 14 | Ex 15 |
|---|---|---|---|---|
| | | | | |
| Binder 2 | 60 | 60 | 60 | 60 |
| Pigment | 7 | 7 | 7 | 7 |
| Silica 2 | 3 | 3 | 3 | 3 |
| Dispersing agent | 0.5 | 0.5 | 0.5 | 0.5 |
| Solvent 3 | 12.5 | 12.5 | 12.5 | 12.5 |
| Cross-linker 1 | 6.5 | 6.5 | 6.5 | 6.5 |
| Catalyst | 0.2 | 0.2 | 0.2 | 0.2 |
| Solvent 2 | 1.3 | 1.3 | 1.3 | 1.3 |
| Siloxane oil | 2 | 2 | 2 | 2 |
| Oil 1 | 2 | 2 | 2 | 2 |

(continued)

| Example No. | Ref2 | Ex 13 | Ex 14 | Ex 15 |
|---|---|---|---|---|
| Hindered amine 2 | | 0.75 | 1.5 | |
| Hindered amine 7 | | | | 3 |
| | | | | |
| Spain, 52 weeks | Poor | Fair | Good | Good |
| Singapore, 48 weeks | Poor | Good | Good | Good |

Examples 13-15 show other examples of an improved effect of the antifouling properties of a paint comprising a poly(oxyalkylene)-modified siloxane oil and a N-O-R hindered amine or a silane modified N-$CH_3$ hindered amine in another polysiloxane binder system than in examples 1-12, compared to a reference only including the poly(oxyalkylene)-modified siloxane oil.

| Example No. | Ref3 | Ex 16 | Ex 17 |
|---|---|---|---|
| | | | |
| Binder 1 | 58.3 | 58.3 | 58.3 |
| Pigment | 4 | 4 | 4 |
| Silica 1 | 1 | 1 | 1 |
| Wax | 0.7 | 0.7 | 0.7 |
| Solvent 1 | 23.4 | 23.4 | 25.4 |
| Cross-linker 1 | 2.3 | 2.3 | 2.3 |
| Catalyst | 0.4 | 0.4 | 0.4 |
| Solvent 2 | 1.2 | 1.2 | 1.2 |
| Oil 2 | | 2 | |
| Lanolin-PEG | | | 2 |
| Hindered amine 2 | 1 | 1 | 1 |
| | | | |
| Singapore, 8 weeks | Poor | Good | Good |

Examples 16 and 17 show an improved effect of the antifouling properties of a paint comprising a poly(oxyalkylene)-modified lanolin oil or a poly(oxyalkylene)-modified siloxane oil and a N-O-R hindered amine, and an equally good effect of the two oils.

| Example No. | Ref4 | Ref5 | Ex 18 | Ex 19 |
|---|---|---|---|---|
| | | | | |
| Binder 1 | 58.3 | 58.3 | 58.3 | 58.3 |
| Pigment | 4 | 4 | 4 | 4 |
| Silica 1 | 1 | 1 | 1 | 1 |
| Wax | 0.5 | 0.5 | 0.5 | 0.5 |
| Solvent 1 | 25.9 | 25.9 | 25.9 | 25.9 |
| Cross-linker 1 | 2.3 | 2.3 | 2.3 | 2.3 |
| Catalyst | 0.4 | 0.4 | 0.4 | 0.4 |
| Solvent 2 | 1.2 | 1.2 | 1.2 | 1.2 |

(continued)

| Example No. | Ref4 | Ref5 | Ex 18 | Ex 19 |
|---|---|---|---|---|
| Oil 3 | | | 2 | 2 |
| PEG-silane | | | 3 | |
| Hindered amine 2 | | 1 | 1 | 1 |
| | | | | |
| Spain, 22 weeks | Poor | Poor | Good | Good |

Examples 18 and 19 show an improved effect of the antifouling properties of a paint comprising a poly(oxyalkylene)-modified siloxane oil and/or a silane modified poly(oxyalkylene) and a N-O-R hindered amine.

| Example No. | Ref6 | Ex 20 | Ex 21 | Ex 22 |
|---|---|---|---|---|
| | | | | |
| Binder 1 | 58.3 | 58.3 | 58.3 | 58.3 |
| Pigment | 4 | 4 | 4 | 4 |
| Silica 1 | 1 | 1 | 1 | 1 |
| Wax | 0.5 | 0.5 | 0.5 | 0.5 |
| Solvent 1 | 25.9 | 25.9 | 25.9 | 25.9 |
| Cross-linker 1 | 2.3 | 2.3 | 2.3 | 2.3 |
| Catalyst | 0.4 | 0.4 | 0.4 | 0.4 |
| Solvent 2 | 1.2 | 1.2 | 1.2 | 1.2 |
| Oil 2 | 2 | 2 | 2 | 2 |
| Hindered amine 4 | | 0.7 | | |
| Hindered amine 5 | | | 0.28 | |
| Hindered amine 6 | | | | 0.5 |
| | | | | |
| Singapore, 16 weeks | Poor | Fair | Good | Fair |

Examples 20-22 demonstrates an improved effect of the antifouling properties of a paint comprising a poly(oxyalkylene)-modified siloxane oil and N-H or N-$CH_3$ hindered amines.

## Claims

**1.** A method for establishing a fouling-release coating system on a surface of a substrate comprising the sequential steps of;

a. optionally applying one or more layers of a primer composition onto the surface of said substrate and allowing said layer(s) to cure, thereby forming a primed substrate;
b. applying one or more layers of silicone-containing tie-coat composition in liquid form, onto the surface of said primed substrate or said substrate, and allowing said layer(s) to cure, thereby forming a cured tie-coat layer;
c. applying one or more layers of a fouling-release coating composition onto said cured tie-coat layer, wherein said fouling-release coating composition comprises a condensation-curable polysiloxane-based binder matrix constituting at least 40 % by dry weight of said coating composition, wherein more than 65 % by weight of said

binder matrix is represented by polysiloxane parts, and allowing said fouling-release coating composition to cure; wherein said tie-coat composition and/or said fouling-release coating composition comprises constituents having poly(oxyalkylene) chains, and wherein said tie-coat composition and/or said fouling-release coating composition further comprises one or more sterically hindered amines, wherein the sterically hindered amines are hindered amine moieties of the general formula I:

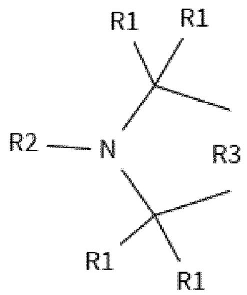

wherein

each R1 is independently linear or branched $C_1$-$C_4$ alkyl;
R2 is selected from -H, optionally substituted linear or branched $C_{1-30}$-alkyl, optionally substituted linear or branched $C_{2-30}$-alkenyl, optionally substituted aryl, -OH, optionally substituted linear or branched $C_{1-30}$-alkoxy, optionally substituted linear or branched $C_{1-30}$-alkenyloxy, optionally substituted aryloxy, optionally substituted linear or branched $C_{1-30}$-alkylcarbonyl, optionally substituted $C_{1-30}$-alkenylcarbonyl, and optionally substituted arylcarbonyl;
R3 is an optionally substituted divalent group forming an N-heterocyclic 5-, 6- or 7-membered ring together with the intervening -C(R1)$_2$-N(R2)-C(R1)$_2$-group, or R3 as defined herein is linked to one or more hindered amine moieties each independently having the general formula I.

**2.** The method according to claim 1, wherein the hindered amine moieties are selected from 2,2,6,6-tetraalkyl piperidine moieties of general formula II:

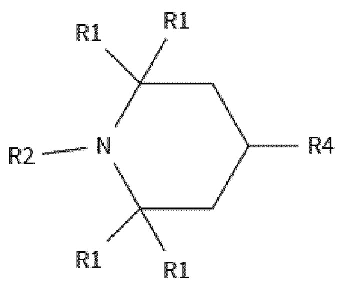

wherein R1 and R2 are defined for general formula I; and R4 represents hydrogen atom(s) or is one or two substituents selected from $C_{1-30}$-alkyl, $C_{1-30}$-alkenyl, aryl, hydroxy, $C_{1-30}$-alkoxy, $C_{1-30}$-alkenyloxy, aryloxy, $C_{1-30}$-alkylcarbonyl, $C_{1-30}$-alkenylcarbonyl, arylcarbonyl, $C_{1-30}$-alkylcarbonyloxy, $C_{1-30}$-alkenylcarbonyloxy, and arylcarbonyloxy, in particular from $C_{1-8}$-alkoxy, $C_{1-8}$-alkenyloxy, aryloxy, $C_{1-8}$-alkylcarbonyloxy, $C_{1-8}$-alkenylcarbonyloxy, and arylcarbonyloxy and/or the attachment point(s) for a polymer, wherein two of said substituents for R4 may form a spiro structure, or R4 as defined herein is linked to one or more hindered amine moieties each independently having the general formula II.

**3.** The method according to claim 2, wherein R2 is not H and/or R2 is not -OH.

**4.** The method according to any one of the preceding claims, wherein the constituent having poly(oxyalkylene) chains is selected from poly(oxyalkylene)-modified alcohols of the general formula (I):

$$(POA\text{-}O\text{-})x\text{-}R\text{-}(\text{-}O\text{-}FA)_Y \qquad (I)$$

wherein

each POA represents a poly(oxyalkylene) moiety,
each FA represents a $C_{8-30}$ fatty acyl moiety,
R represents the organic residue of an alcohol $R(OH)_{X+Y}$, said organic residue having 2-50 carbon atoms, and X is 1-5, Y is 0-10 and X+Y is 1-12.

**5.** The method according to any one of the preceding claims, wherein said tie-coat composition comprises one or more cross-linkable polysiloxanes, preferably selected from hydroxy-functional polysiloxanes, $C_1$-$C_4$ alkoxy-functional polysiloxanes, amino-functional polysiloxanes and epoxy-functional polysiloxanes, and wherein said tie-coat composition comprises 3-90%, preferably 10-80%, more preferably 20-60%, of said one or more cross-linkable polysiloxanes, by wet weight of the total tie-coat composition.

**6.** The method according to any one of the preceding claims, wherein said tie-coat composition additionally comprises up to 30% by wet weight of the total tie-coat composition, of one or more hydrolysable silanes having two or more hydrolysable groups.

**7.** The method according to any one of the preceding claims, wherein the sterically hindered amine(s), in particular 2,2,6,6-tetraalkyl piperidine derivative(s), are present in a total amount of 0.05-10 % by dry weight of said tie-coat composition or fouling release coating composition.

**8.** The method according to any one of the preceding claims, wherein the poly(oxyalkylene) chains have a number average molecular weight ($M_n$) in the range of 200-50,000 g/mol.

**9.** The method according to any one of the preceding claims, wherein the constituent having poly(oxyalkylene) chains is selected from poly(oxyalkylene)-modified polysiloxane oils.

**10.** The method according to any one of claims 1-9, wherein the poly(oxyalkylene) chains are covalently attached to the polysiloxane-based binder matrix.

**11.** The method according to any one of the preceding claims, wherein said tie-coat comprises one or more sterically hindered amines as defined in any one of claims 1-3.

**12.** A fouling-release coating system obtained by the method of any of the preceding claims.

**13.** A fouling-release coating system comprising:

a. a substrate,
b. optionally one or more primer layers,
c. at least one silicone-containing tie-coat layer
d. a fouling-release layer comprising a condensation-cured polysiloxane-based binder matrix constituting at least 40 % by dry weight of said coat, wherein more than 65 % by weight of said binder matrix is represented by polysiloxane parts, said coat comprising constituents having poly(oxyalkylene) chains,
wherein said tie-coat layer and/or said fouling-release layer further comprises one or more sterically hindered amines, wherein the sterically hindered amines are hindered amine moieties of the general formula I:

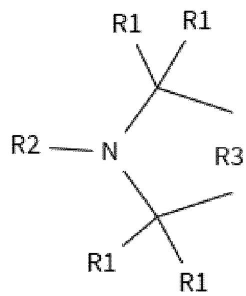

wherein

each R1 is independently linear or branched $C_1$-$C_4$ alkyl;

R2 is selected from -H, optionally substituted linear or branched $C_{1-30}$-alkyl, optionally substituted linear or branched $C_{2-30}$-alkenyl, optionally substituted aryl, -OH, optionally substituted linear or branched $C_{1-30}$-alkoxy, optionally substituted linear or branched $C_{1-30}$-alkenyloxy, optionally substituted aryloxy, optionally substituted linear or branched $C_{1-30}$-alkylcarbonyl, optionally substituted $C_{1-30}$-alkenylcarbonyl, and optionally substituted arylcarbonyl;
R3 is an optionally substituted divalent group forming an N-heterocyclic 5-, 6- or 7-membered ring together with the intervening $-C(R1)_2-N(R2)-C(R1)_2-$ group, or R3 as defined herein is linked to one or more hindered amine moieties each independently having the general formula I.

**14.** The coating system according to claim 13, wherein said tie-coat layer comprises one or more poly(oxyalkylene)-modified polysiloxane oils

**15.** The coating system according to claim 13, wherein hindered amine moieties, in particular 2,2,6,6-tetraalkyl piperidine moieties, are present in an amount of 0.05-10 % by dry weight of said tie-coat layer or fouling release layer.

**Patentansprüche**

**1.** Verfahren zur Herstellung eines Bewuchsfreisetzungsbeschichtungssystems auf einer Substratoberfläche, das die aufeinanderfolgenden Schritte umfasst:

a. optionales Aufbringen einer oder mehrerer Schichten einer Grundierungszusammensetzung auf die Oberfläche des Substrats und Aushärtenlassen der Schicht(en), wodurch ein grundiertes Substrat gebildet wird;
b. Aufbringen einer oder mehrerer Schichten einer silikonhaltigen Verbindungsbeschichtungszusammensetzung in flüssiger Form auf die Oberfläche des grundierten Substrats oder des Substrats und Aushärtenlassen der Schicht(en), wodurch eine ausgehärtete Verbindungsbeschichtungsschicht gebildet wird;
c. Aufbringen einer oder mehrerer Schichten einer Bewuchsfreisetzungsbeschichtungszusammensetzung auf die ausgehärtete Verbindungsbeschichtungsschicht, wobei die Bewuchsfreisetzungsbeschichtungszusammensetzung eine kondensationshärtbare Bindemittelmatrix auf Polysiloxanbasis umfasst, die mindestens 40 % des Trockengewichts der Beschichtungszusammensetzung ausmacht, wobei mehr als 65 % des Gewichts der Bindemittelmatrix durch Polysiloxanteile repräsentiert werden, und Aushärtenlassen der Bewuchsfreisetzungsbeschichtungszusammensetzung; wobei die Verbindungsbeschichtungszusammensetzung und/oder die Bewuchsfreisetzungsbeschichtungszusammensetzung Bestandteile mit Poly(oxyalkylen)-Ketten umfasst, und wobei die Verbindungsbeschichtungszusammensetzung und/oder die Bewuchsfreisetzungsbeschichtungszusammensetzung ferner ein oder mehrere sterisch gehinderte Amine umfasst, wobei die sterisch gehinderten Amine gehinderte Amineinheiten der allgemeinen Formel I sind:

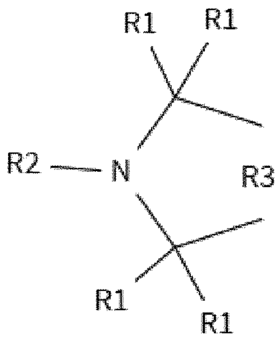

wobei

jedes R1 unabhängig lineares oder verzweigtes $C_1$-$C_4$-Alkyl ist;
R2 ausgewählt ist aus -H, optional substituiertem linearem oder verzweigtem $C_1$-$_{30}$-Alkyl, optional substituiertem linearem oder verzweigtem $C_2$-$_{30}$-Alkenyl, optional substituiertem Aryl, -OH, optional substituiertem linearem oder verzweigtem $C_1$-$_{30}$-Alkoxy, optional substituiertem linearem oder verzweigtem $C_1$-$_{30}$-Alkenyloxy, optional substituiertem Aryloxy, optional substituiertem linearem oder verzweigtem $C_1$-$_{30}$-Alkylcarbonyl, optional substituiertem $C_1$-$_{30}$-Alkenylcarbonyl und optional substituiertem Arylcarbonyl;
R3 eine optional substituierte zweiwertige Gruppe ist, die zusammen mit der dazwischenliegenden

$-C(R1)_2-N(R2)-C(R1)_2$-Gruppe einen N-heterozyklischen 5-, 6- oder 7-gliedrigen Ring bildet, oder R3, wie hierin definiert, an eine oder mehrere gehinderte Amineinheiten gebunden ist, die jeweils unabhängig voneinander die allgemeine Formel I aufweisen.

2. Verfahren nach Anspruch 1, wobei die gehinderten Amineinheiten ausgewählt sind aus 2,2,6,6-Tetraalkylpiperidineinheiten der allgemeinen Formel II:

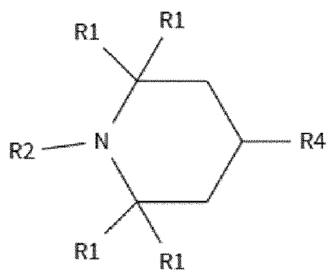

wobei R1 und R2 für die allgemeine Formel I definiert sind; und R4 Wasserstoffatom(e) repräsentiert oder ein oder zwei Substituenten ist, ausgewählt aus $C_1$-$_{30}$-Alkyl, $C_1$-$_{30}$-Alkenyl, Aryl, Hydroxy, $C_1$-$_{30}$-Alkoxy, $C_1$-$_{30}$-Alkenyloxy, Aryloxy, $C_1$-$_{30}$-Alkylcarbonyl, $C_1$-$_{30}$-Alkenylcarbonyl, Arylcarbonyl, $C_1$-$_{30}$-Alkylcarbonyloxy, $C_1$-$_{30}$-Alkenylcarbonyloxy und Arylcarbonyloxy, insbesondere von $C_1$-$_8$-Alkoxy, $C_1$-$_8$-Alkenyloxy, Aryloxy, $C_1$-$_8$-Alkylcarbonyloxy, $C_1$-$_8$-Alkenylcarbonyloxy und Arylcarbonyloxy und/oder den Anbindungsstelle(n) für ein Polymer, wobei zwei der Substituenten für R4 eine Spirostruktur bilden können, oder R4 wie hierin definiert an eine oder mehrere gehinderte Amineinheiten gebunden ist, die jeweils unabhängig voneinander die allgemeine Formel II aufweisen.

3. Verfahren nach Anspruch 2, wobei R2 nicht H ist und/oder R2 nicht -OH ist.

4. Verfahren nach einem der vorhergehenden Ansprüche, wobei der Bestandteil mit Poly(oxyalkylen)-Ketten ausgewählt ist aus poly(oxyalkylen)-modifizierten Alkoholen der allgemeinen Formel (I):

$$(POA\text{-}O\text{-})_X\text{-}R\text{-}(\text{-}O\text{-}FA)_Y \qquad (I)$$

wobei

jedes POA eine Poly(oxyalkylen)-Einheit repräsentiert,
jede FA eine $C_8$-$_{30}$-Fettsäureacyleinheit repräsentiert,
R den organischen Rest eines Alkohols $R(OH)_{x+y}$ repräsentiert, wobei der organische Rest 2 bis 50 Kohlenstoffatome aufweist, und
X 1-5 ist, Y 0-10 ist und X+Y 1-12 ist.

5. Verfahren nach einem der vorhergehenden Ansprüche, wobei die Verbindungsbeschichtungszusammensetzung ein oder mehrere vernetzbare Polysiloxane umfasst, vorzugsweise ausgewählt aus hydroxyfunktionellen Polysiloxanen, $C_1$-$C_4$-alkoxy-funktionellen Polysiloxanen, amino-funktionellen Polysiloxanen und epoxy-funktionellen Polysiloxanen, und wobei die Verbindungsbeschichtungszusammensetzung 3 bis 90 %, vorzugsweise 10 bis 80 %, mehr bevorzugt 20 bis 60 %, bezogen auf das Nassgewicht der gesamten Verbindungsbeschichtungszusammensetzung, des einen oder der mehreren vernetzbaren Polysiloxane, umfasst.

6. Verfahren nach einem der vorhergehenden Ansprüche, wobei die Verbindungsbeschichtungszusammensetzung zusätzlich bis zu 30 %, bezogen auf das Nassgewicht der gesamten Verbindungsbeschichtungszusammensetzung, eines oder mehrerer hydrolysierbarer Silane mit zwei oder mehr hydrolysierbaren Gruppen umfasst.

7. Verfahren nach einem der vorhergehenden Ansprüche, wobei das/die sterisch gehinderte(n) Amin(e), insbesondere das/die Derivat(e) von 2,2,6,6-Tetraalkylpiperidin, in einer Gesamtmenge von 0,05 bis 10 %, bezogen auf das Trockengewicht der Verbindungsbeschichtungszusammensetzung oder der Bewuchsfreisetzungsbeschichtungszusammensetzung vorhanden sind.

8. Verfahren nach einem der vorhergehenden Ansprüche, wobei die Poly(oxyalkylen)-Ketten ein zahlenmittleres Molekulargewicht (Mn) im Bereich von 200 bis 50.000 g/Mol aufweisen.

**9.** Verfahren nach einem der vorhergehenden Ansprüche, wobei der Bestandteil mit Poly(oxyalkylen)-Ketten ausgewählt ist aus poly(oxyalkylen)-modifizierten Polysiloxanölen.

**10.** Verfahren nach einem der Ansprüche 1 bis 9, wobei die Poly(oxyalkylen)-Ketten kovalent an die Bindemittelmatrix auf Polysiloxanbasis gebunden sind.

**11.** Verfahren nach einem der vorhergehenden Ansprüche, wobei die Verbindungsbeschichtung ein oder mehrere sterisch gehinderte Amine nach einem der Ansprüche 1 bis 3 umfasst.

**12.** Bewuchsfreisetzungsbeschichtungssystem, das durch das Verfahren nach einem der vorhergehenden Ansprüche erhalten wird.

**13.** Bewuchsfreisetzungsbeschichtungssystem, umfassend:

a. ein Substrat,
b. optional eine oder mehrere Grundierungsschichten,
c. mindestens eine silikonhaltige Verbindungsbeschichtungsschicht
d. eine Bewuchsfreisetzungsschicht, die eine kondensationsgehärtete Bindemittelmatrix auf Polysiloxanbasis umfasst, die mindestens 40 %, bezogen auf das Trockengewicht der Beschichtung ausmacht, wobei mehr als 65 Gew.-% der Bindemittelmatrix durch Polysiloxanteile repräsentiert sind und die Beschichtung Bestandteile mit Poly(oxyalkylen)-Ketten umfasst,
wobei die Verbindungsbeschichtungsschicht und/oder die Bewuchsfreisetzungsschicht ferner ein oder mehrere sterisch gehinderte Amine umfasst, wobei die sterisch gehinderten Amine gehinderte Amineinheiten der allgemeinen Formel I sind:

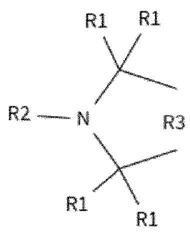

wobei

jedes R1 unabhängig lineares oder verzweigtes $C_1$-$C_4$-Alkyl ist;
R2 ausgewählt ist aus -H, optional substituiertem linearem oder verzweigtem $C_{1}$-$_{30}$-Alkyl, optional substituiertem linearem oder verzweigtem $C_{2}$-$_{30}$-Alkenyl, optional substituiertem Aryl, -OH, optional substituiertem linearem oder verzweigtem $C_{1}$-$_{30}$-Alkoxy, optional substituiertem linearem oder verzweigtem $C_{1}$-$_{30}$-Alkenyloxy, optional substituiertem Aryloxy, optional substituiertem linearem oder verzweigtem $C_{1}$-$_{30}$-Alkylcarbonyl, optional substituiertem $C_{1}$-$_{30}$-Alkenylcarbonyl und optional substituiertem Arylcarbonyl;
R3 eine optional substituierte zweiwertige Gruppe ist, die zusammen mit der dazwischenliegenden $-C(R1)_2-N(R2)-C(R1)_2$-Gruppe einen N-heterozyklischen 5-, 6- oder 7-gliedrigen Ring bildet, oder R3, wie hierin definiert, an eine oder mehrere gehinderte Amineinheiten gebunden ist, die jeweils unabhängig voneinander die allgemeine Formel I aufweisen.

**14.** Beschichtungssystem nach Anspruch 13, wobei die Verbindungsbeschichtungsschicht ein oder mehrere Poly(oxyalkylen)-modifizierte Polysiloxanöle umfasst.

**15.** Beschichtungssystem nach Anspruch 13, wobei gehinderten Amineinheiten, insbesondere die 2,2,6,6-Tetraalkylpiperidineinheiten, in einer Menge von 0,05 bis 10 %, bezogen auf das Trockengewicht der Verbindungsbeschichtungsschicht oder der Bewuchsfreisetzungsschicht vorhanden sind.

## Revendications

**1.** Procédé d’établissement d’un système de revêtement anti-salissure sur une surface d’un substrat comprenant les

étapes séquentielles consistant à :

a. éventuellement appliquer une ou plusieurs couches d'une composition d'apprêt sur la surface dudit substrat et permettre le durcissement de ladite ou desdites couche(s), formant ainsi un substrat apprêté ;
b. appliquer une ou plusieurs couches de composition de couche d'accrochage contenant du silicone sous forme liquide, sur la surface dudit substrat apprêté ou ledit substrat, et permettre le durcissement de ladite ou desdites couche(s), formant ainsi une couche d'accrochage durcie ;
c. appliquer une ou plusieurs couches d'une composition de revêtement anti-salissure sur ladite couche d'accrochage durcie, ladite composition de revêtement anti-salissure comprenant une matrice de liant à base de polysiloxane durcissable par condensation constituant au moins 40 % en poids sec de ladite composition de revêtement, plus de 65 % en poids de ladite matrice de liant étant représentés par des parties polysiloxane, et permettre le durcissement de ladite composition de revêtement anti-salissure ; dans lequel ladite composition de couche d'accrochage et/ou ladite composition de revêtement anti-salissure comprend des constituants ayant des chaînes poly(oxyalkylène), et dans lequel ladite composition de couche d'accrochage et/ou ladite composition de revêtement anti-salissure comprend en outre une ou plusieurs amines stériquement encombrées, les amines stériquement encombrées étant des fragments amine encombrée de formule générale I :

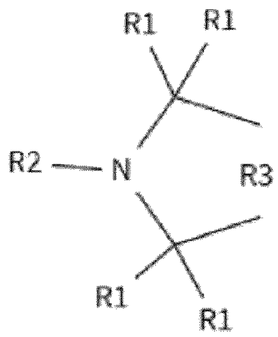

dans laquelle

chaque R1 est indépendamment un groupe alkyle en $C_1$ à $C_4$ linéaire ou ramifié ;
R2 est choisi parmi -H, un groupe alkyle en $C_{1-30}$ linéaire ou ramifié éventuellement substitué, un groupe alcényle en $C_{2-30}$ linéaire ou ramifié éventuellement substitué, un groupe aryle éventuellement substitué, -OH, un groupe alcoxy en $C_{1-30}$ linéaire ou ramifié éventuellement substitué, un groupe alcényloxy en $C_{1-30}$ linéaire ou ramifié éventuellement substitué, un groupe aryloxy éventuellement substitué, un groupe alkylcarbonyle en $C_{1-30}$ linéaire ou ramifié éventuellement substitué, un groupe alcénylcarbonyle en $C_{1-30}$ éventuellement substitué et un groupe arylcarbonyle éventuellement substitué ;
R3 est un groupe divalent éventuellement substitué formant un cycle N-hétérocyclique à 5, 6 ou 7 chaînons conjointement avec le groupe intervenant $-C(R1)_2-N(R2)-C(R1)_2-$, ou R3 tel que défini ici est lié à un ou plusieurs fragments amine encombrée, chacun ayant indépendamment la formule générale I.

**2.** Procédé selon la revendication 1, dans lequel les fragments amine encombrée sont choisis parmi les fragments 2,2,6,6-tétraalkylpipéridine de formule générale II :

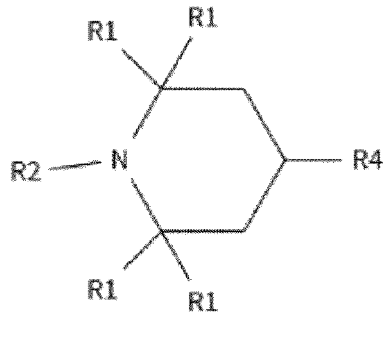

dans laquelle R1 et R2 sont définis pour la formule générale I ; et R4 représente un ou plusieurs atome(s) d'hydrogène

ou représente un ou deux substituants choisis parmi un groupe alkyle en $C_{1-30}$, un groupe alcényle en $C_{1-30}$, un groupe aryle, un groupe hydroxy, un groupe alcoxy en $C_{1-30}$, un groupe alcényloxy en $C_{1-30}$, un groupe aryloxy, un groupe alkylcarbonyle en $C_{1-30}$, un groupe alcénylcarbonyle en $C_{1-30}$, un groupe arylcarbonyle, un groupe alkylcarbonyloxy en $C_1$ à $C_{30}$, un groupe alcénylcarbonyloxy en $C_{1-30}$ et un groupe arylcarbonyloxy, en particulier un groupe alcoxy en $C_{1-8}$, un groupe alcényloxy en $C_{1-8}$, un groupe aryloxy, un groupe alkylcarbonyloxy en $C_{1-8}$, un groupe alcénylcarbonyloxy en $C_{1-8}$ et un groupe arylcarbonyloxy et/ou le(s) point(s) de liaison pour un polymère, dans laquelle deux desdits substituants pour R4 peuvent former une structure spiro, ou R4 tel que défini ici est lié à un ou plusieurs fragments amine encombrée, chacun ayant indépendamment la formule générale II.

**3.** Procédé selon la revendication 2, dans lequel R2 n'est pas H et/ou R2 n'est pas -OH.

**4.** Procédé selon l'une quelconque des revendications précédentes, dans lequel le constituant ayant des chaînes poly(oxyalkylène) est choisi parmi les alcools modifiés par un poly(oxyalkylène) de formule générale (I) :

$$(POA\text{-}O\text{-})_X\text{-}R\text{-}(\text{-}O\text{-}FA)_Y \qquad (I)$$

dans laquelle

chaque POA représente un fragment poly(oxyalkylène),
chaque FA représente un fragment acyle gras en $C_{8}$-$_{30}$,
R représente le résidu organique d'un alcool $R(OH)_{X+Y}$, ledit résidu organique ayant 2 à 50 atomes de carbone, et X vaut 1 à 5, Y vaut 0 à 10 et X+Y vaut 1 à 12.

**5.** Procédé selon l'une quelconque des revendications précédentes, dans lequel ladite composition de couche d'accrochage comprend un ou plusieurs polysiloxanes réticulables, de préférence choisis parmi les polysiloxanes à fonctionnalité hydroxy, les polysiloxanes à fonctionnalité alcoxy en $C_{1-4}$, les polysiloxanes à fonctionnalité amino et les polysiloxanes à fonctionnalité époxy, et dans lequel ladite composition de couche d'accrochage comprend de 3 à 90 %, de préférence de 10 à 80 %, plus préférablement de 20 à 60 %, dudit un ou desdits polysiloxanes réticulables, en poids humide de la composition totale de couche d'accrochage.

**6.** Procédé selon l'une quelconque des revendications précédentes, dans lequel ladite composition de couche d'accrochage comprend en outre jusqu'à 30 % en poids humide de la composition totale de couche d'accrochage, d'un ou de plusieurs silanes hydrolysables ayant deux groupes hydrolysables ou plus.

**7.** Procédé selon l'une quelconque des revendications précédentes, dans lequel la ou les amine(s) stériquement encombrée(s), en particulier le ou les dérivé(s) de 2,2,6,6-tétraalkylpipéridine, sont présentes en une quantité totale de 0,05 à 10 % en poids sec de ladite composition de couche d'accrochage ou composition de revêtement anti-salissure.

**8.** Procédé selon l'une quelconque des revendications précédentes, dans lequel les chaînes poly(oxyalkylène) ont un poids moléculaire moyen en nombre ($M_n$) compris dans la plage de 200 à 50 000 g/mol.

**9.** Procédé selon l'une quelconque des revendications précédentes, dans lequel le constituant ayant des chaînes poly(oxyalkylène) est choisi parmi les huiles de polysiloxane modifié par un poly(oxyalkylène).

**10.** Procédé selon l'une quelconque des revendications 1 à 9, dans lequel les chaînes poly(oxyalkylène) sont liées de manière covalente à la matrice de liant à base de polysiloxane.

**11.** Procédé selon l'une quelconque des revendications précédentes, dans lequel ladite couche d'accrochage comprend une ou plusieurs amines stériquement encombrées telles que définies dans l'une quelconque des revendications 1 à 3.

**12.** Système de revêtement anti-salissure obtenu par le procédé selon l'une quelconque des revendications précédentes.

**13.** Système de revêtement anti-salissure comprenant :

a. un substrat,
b. éventuellement une ou plusieurs couches d'apprêt,

c. au moins une couche d'accrochage contenant du silicone
d. une couche anti-salissure comprenant une matrice de liant à base de polysiloxane durci par condensation constituant au moins 40 % en poids sec dudit revêtement, plus de 65 % en poids de ladite matrice de liant étant représentés par des parties polysiloxane, ledit revêtement comprenant des constituants ayant des chaînes poly(oxyalkylène),
dans lequel ladite de couche d'accrochage et/ou ladite couche de revêtement anti-salissure comprend en outre une ou plusieurs amines stériquement encombrées, les amines stériquement encombrées étant des fragments amine encombrée de formule générale I :

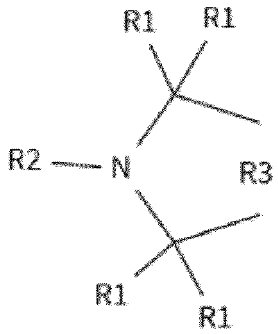

dans laquelle

chaque R1 est indépendamment un groupe alkyle en $C_1$ à $C_4$ linéaire ou ramifié ;
R2 est choisi parmi -H, un groupe alkyle en $C_{1-30}$ linéaire ou ramifié éventuellement substitué, un groupe alcényle en $C_{2-30}$ linéaire ou ramifié éventuellement substitué, un groupe aryle éventuellement substitué, -OH, un groupe alcoxy en $C_{1-30}$ linéaire ou ramifié éventuellement substitué, un groupe alcényloxy en $C_{1-30}$ linéaire ou ramifié éventuellement substitué, un groupe aryloxy éventuellement substitué, un groupe alkylcarbonyle en $C_{1-30}$ linéaire ou ramifié éventuellement substitué, un groupe alcénylcarbonyle en $C_{1-30}$ éventuellement substitué et un groupe arylcarbonyle éventuellement substitué ;
R3 est un groupe divalent éventuellement substitué formant un cycle N-hétérocyclique à 5, 6 ou 7 chaînons conjointement avec le groupe intervenant $-C(R1)_2-N(R2)-C(R1)_2-$, ou R3 tel que défini ici est lié à un ou plusieurs fragments amine encombrée, chacun ayant indépendamment la formule générale I.

**14.** Système de revêtement selon la revendication 13, dans lequel ladite couche d'accrochage comprend une ou plusieurs huiles de polysiloxane modifié par un poly(oxyalkylène).

**15.** Système de revêtement selon la revendication 13, dans lequel des fragments amine encombrée, en particulier des fragments 2,2,6,6-tétraalkylpipéridine, sont présents en une quantité de 0,05 à 10 % en poids sec de ladite couche d'accrochage ou couche anti-salissure.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011076856 A
- WO 2013000479 A
- WO 2014117786 A
- WO 2016004961 A
- WO 2016088630 A
- US 2003232910 A
- JP 2010280852 B
- WO 2013000478 A
- WO 9800017 A
- WO 2014166492 A
- WO 2010018164 A
- WO 2005033219 A
- FR 2930778
- WO 2010149869 A
- WO 0077102 A
- US 2004006190 A
- WO 2008132196 A
- WO 2016105974 A
- US 7377968 B


### Non-patent literature cited in the description


- **KURT WEIGEL.** EPOXIDHARZLACKE. Wissenschaftliche Verlagsgesellschaft M.B.H, 1965, 203-210
- **M. ASH ; I. ASH.** Handbook of Paint and Coating Raw Materials. Gower Publ. Ltd, 1996, vol. 1, 821-823, 849-851